# EUROPEAN PATENT SPECIFICATION

(11) **EP 3 719 085 B1**
(45) Date of publication and mention of the grant of the patent: **26.10.2022**
(21) Application number: 19866735.4
(22) Date of filing: 24.09.2019
(51) Int. Cl.: C08F 222/10, C08F 290/06, C08G 18/61, C08G 18/62, C08J 7/04, C08J 7/046, C08L 75/14, C09D 4/06, C09D 133/08, C09D 143/04, C09D 151/08, C09D 175/04, C09D 175/14, G02B 1/14, G02B 5/20, G02B 5/22

(54) **RESIN COMPOSITION, OPTICAL LAYER, COVER MEMBER AND MOVABLE BODY**
HARZZUSAMMENSETZUNG, OPTISCHE SCHICHT, ABDECKELEMENT UND BEWEGLICHER KÖRPER
COMPOSITION DE RÉSINE, COUCHE OPTIQUE, ÉLÉMENT DE COUVERCLE ET CORPS MOBILE

(30) Priority: 27.09.2018 JP 2018182900
(43) Date of publication of application: 07.10.2020
(73) Proprietor: Sumitomo Bakelite Co.Ltd., Shinagawa-ku Tokyo 140-0002 (JP)
(72) Inventor: FUNAKOSHI, Yuichiro, Tokyo 140-0002 (JP)
(74) Representative: Ter Meer Steinmeister & Partner
(86) International application number: PCT/JP2019/037234
(87) International publication number: WO 2020/066996

(56) References cited:
- JP-A- 2008 218 140
- JP-A- 2011 516 910
- JP-A- 2012 098 736
- JP-A- 2018 109 734
- JP-A- 2018 109 734

## Description

### Technical Field

The present invention relates to a resin composition used for forming an optical layer, an optical layer, a cover member, and a moving body.

### Background Art

Generally, molded articles formed of a resin material having light-transmitting properties are light and have excellent molding properties. Particularly, the molded articles formed of a polycarbonate-based resin have excellent transparency and higher impact resistance compared to glass products. Therefore, these are frequently used in covers and windshield boards for various lamp lenses, window materials, instruments, and the like (for example, see PTL 1 and PTL 2).

Such molded articles can be used as a cover member that moving bodies such as automobiles or two-wheel vehicles have. These moving bodies are used outdoors. Accordingly, in the moving bodies, a cover member including a hardcoat layer (coating layer) is used which is formed by performing a hard coating treatment on the surface of a molded article such that the cover member can endure an extremely harsh environment such as sunlight or rain.

The coating layer is required to have weather fastness and environmental tolerance such that the coating layer can endure a harsh environment. Furthermore, from the viewpoint of surface protection, the coating layer is also required to have scratch resistance as an essential characteristic. In addition, depending on the purpose, the coating layer is required to have various characteristics such as bending properties (processability), and has been examined in various ways in recent years.

Hitherto, depending on the usage environment of moving bodies, the coating layer has been in contact with chemicals such as a petroleum-based solvent used at the time of repairing the moving bodies. In a case where the coating layer stained with the chemicals is left as it is, unfortunately, the appearance thereof is impaired.

### Citation List

### Patent Literature

[PTL 1] JP-A-2013-227562
[PTL 2] JP-A-2018-109734

### Summary of Invention

### Technical Problem

An object of the present invention is to provide a resin composition capable of forming an optical layer as a cover member, which is precisely inhibited or prevented from experiencing the appearance impairment even though the cover member is exposed to chemicals such as a petroleum-based solvent, an optical layer and a cover member formed using the resin composition, and an extremely reliable moving body including the cover member. Solution to Problem

The object is achieved by the present invention described in the appended claims.

### Advantageous Effects of Invention

The resin composition of the present invention is used for forming a second layer in an optical layer including a first layer and the second layer protecting the first layer, in which the first layer contains a resin material as a main material having light-transmitting properties and a visible light absorber which is dispersed in the resin material and absorbs visible light.

In the present invention, the resin composition contains a silicon-modified (meth)acryl resin, a urethane (meth)acrylate, and a polyfunctional (meth)acrylate, wherein the polyfunctional (meth)acrylate contains a tetrafunctional (meth)acrylate and an aromatic difunctional (meth)acrylate, and a content rate of the tetrafunctional (meth)acrylate in the resin composition is equal to or higher than 40 wt% and equal to or lower than 70 wt%. In a case where the second layer having an average thickness of 12 µm is formed on a base material containing a bisphenol-type polycarbonate-based resin as a main material, a coating film of a mixed solvent containing a petroleum-based solvent at a proportion equal to or higher than 45 wt% is formed on the second layer and left as it is under a condition of 85°C × 24 hours, the second layer is then returned to an atmosphere of 25°C, the mixed solvent is removed thereafter, and then a cross-cut method specified in JIS K 5600-5-6 is implemented on the second layer, an adherence of the second layer cut in the form of a lattice with respect to the base material is equal to or higher than 95%. Therefore, an optical layer including the second layer can be used as a cover member which is precisely inhibited or prevented from experiencing appearance impairment even though the second layer is exposed to chemicals such as a petroleum-based solvent. Accordingly, a moving body including the optical layer as a cover member is extremely reliable.

### Brief Description of Drawings

FIG. 1 is a vertical cross-sectional view illustrating a first embodiment of the optical layer of the present invention.
FIG. 2 is a vertical cross-sectional view illustrating a second embodiment of the optical layer of the present invention.

### Description of Embodiments

Hereinafter, the resin composition, the optical layer, the cover member, and the moving body of the present invention will be specifically described based on suitable embodiments illustrated in the attached drawings.

The resin composition of the present invention is a resin composition used for forming a second layer in an optical layer including a first layer and the second layer protecting the first layer, in which the first layer contains a resin material as a main material having light-transmitting properties and a visible light absorber which is dispersed in the resin material and absorbs visible light. The resin composition contains a silicon-modified (meth)acryl resin, a urethane (meth)acrylate, and a polyfunctional (meth) acrylate, and satisfies the following condition A.

Condition A: In a case where the second layer having an average thickness of 12 µm is formed on a base material containing a bisphenol-type polycarbonate-based resin as a main material, a coating film of a mixed solvent containing a petroleum-based solvent at a proportion equal to or higher than 45 wt% is formed on the second layer and left as it is under a condition of 85°C × 24 hours, the second layer is then returned to an atmosphere of 25°C, the mixed solvent is removed thereafter, and then a cross-cut method specified in JIS K 5600-5-6 is implemented on the second layer, an adherence of the second layer cut in the form of a lattice with respect to the base material is equal to or higher than 95%. According to the resin composition of the present invention, the optical layer including the second layer satisfying the condition A is formed. Therefore, even though the optical layer is exposed to chemicals such as a petroleum-based solvent, in the optical layer, it is possible to precisely inhibit or prevent the second layer (protective layer) from being peeled from the first layer (base material layer). Accordingly, the optical layer can be used as a cover member maintaining excellent appearance.

Hereinafter, first, before the resin composition, the optical layer, the cover member, and the moving body of the present invention are described, the optical layer of the present invention will be described.

### <Optical layer>

### <<First embodiment>>

First, a first embodiment of the optical layer of the present invention will be described.

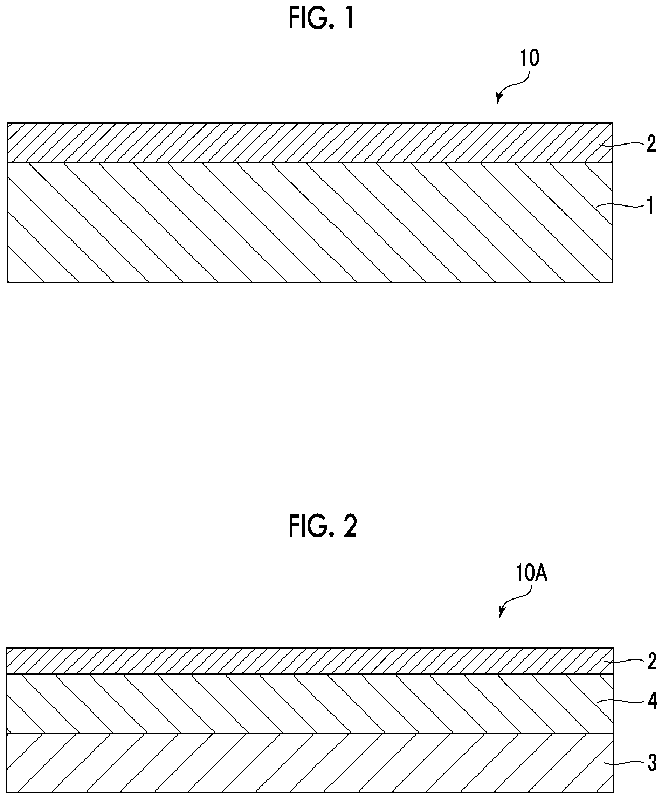

FIG. 1 is a vertical cross-sectional view illustrating the first embodiment of the optical layer of the present invention. Hereinafter, for the sake of description, the upper side and the lower side in FIG. 1 will be described as "top" and "bottom" respectively.

An optical layer 10 (optical film) is applied to a cover member. In the present embodiment, as shown in FIG. 1, the optical layer 10 has a base material layer 1 (first layer) and a protective layer 2 (second layer) which is laminated on the base material layer 1 and protects the base material layer 1.

In a case where the optical layer 10 is applied to a cover member, the optical layer 10 is installed such that the protective layer 2 faces outside and the base material layer 1 is on the side of a substance that is to be covered. In a case where the optical layer 10 is installed as described above, it is possible to make the protective layer 2 (hardcoat layer) function as a protective layer protecting the base material layer 1.

The base material layer 1 (first layer) contains a resin material as a main material having light-transmitting properties and a visible light absorber which is dispersed in the resin material and absorbs visible light. As a result, the base material layer 1 has a function of allowing the transmission of light having a desired wavelength range by inhibiting or preventing the transmission of visible light in a specific wavelength range.

By including the base material layer 1, the optical layer 10 (cover member) exhibits light blocking properties of blocking light in specific wavelength range. As a result, the optical layer 10 exhibits light-transmitting properties of transmitting light having a desired wavelength range. Accordingly, the optical layer 10 can be used as a cover member that allows the transmission of light of desired color.

The resin material (base resin) is contained as a main material of the base material layer 1 and used for molding the base material layer 1 in the form of a substrate.

The resin material is not particularly limited as long as it is a material having light-transmitting properties. Examples thereof include an acrylic resin, a polystyrene-based resin, a polyethylene-based resin, a polypropylene-based resin, a polyester-based resin such as polyethylene terephthalate (PET) and polyethylene naphthalate (PEN), a polycarbonate-based resin, a vinyl chloride-based resin, a polyacetal-based resin, and the like. One kind of each of these can be used singly, or two or more kinds of these can be used in combination. Among these, a polycarbonate-based resin is particularly preferable. The polycarbonate-based resin is rich in transparency (light-transmitting properties) or mechanical strength such as stiffness or impact resistance. Therefore, in a case where the polycarbonate-based resin is used as the resin material, it is possible to improve the transparency of the optical layer 10 in the resin material or improve the mechanical strength of the optical layer 10. Furthermore, the polycarbonate-based resin has a specific gravity of about 1.2 and is classified as a light material among resin materials . Accordingly, in a case where the polycarbonate-based resin is used as the resin material, the optical layer 10 can be lightened.

As the polycarbonate-based resin, various polycarbonate-based resins having diverse molecular structures can be used. Among these, a bisphenol-type polycarbonate-based resin is preferable. The bisphenol-type polycarbonate-based resin has a benzene ring on the main chain thereof, and accordingly, the optical layer 10 has higher strength.

The bisphenol-type polycarbonate-based resin is synthesized, for example, by an interfacial polycondensation reaction between bisphenol and phosgene, an ester exchange reaction between bisphenol and diphenyl carbonate, and the like.

Examples of the bisphenol include bisphenol A, bisphenol (modified bisphenol) as an origin of a repeating unit of polycarbonate represented by the following Formula (A), and the like.

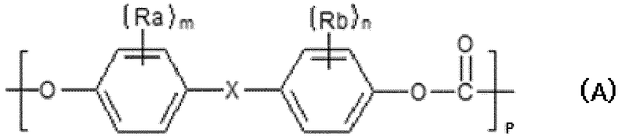

(In Formula (A), X represents an alkyl group having 1 to 18 carbon atoms, an aromatic group, or a cyclic aliphatic group, Ra and Rb each independently represent an alkyl group having 1 to 12 carbon atoms, m and n each independently represent an integer of 0 to 4, and p represents the number of repeating units).

Examples of the bisphenol as an origin of the a repeating unit of polycarbonate represented by the Formula (A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, 2,2'-bis(4-hydroxy-3-methylphenyl)propane, and the like. One kind of each of these can be used singly, or two or more kinds of these can be used in combination.

The content of the resin material in the optical layer 10 is not particularly limited, but is preferably equal to or greater than 75 wt% and more preferably equal to or greater than 85 wt%. In a case where the content of the resin material is within the above range, it is possible to make the optical layer 10 exhibit excellent strength.

The visible light absorber is a material that inhibits or prevents the transmission of visible light in a specific wavelength range. By causing the visible light absorber to be substantially homogeneously incorporated into the base material layer 1 in a state of being dispersed in the base material layer 1, the function of allowing the transmission of light having a desired wavelength range is given to the base material layer 1.

The visible light absorber is not particularly limited, and examples thereof include a first light absorber absorbing light having a wavelength equal to or longer than 300 nm and equal to or shorter than 550 nm, a second light absorber absorbing light having a wavelength equal to or longer than 450 nm and equal to or shorter than 800 nm, and a third light absorber absorbing light having a wavelength equal to or longer than 400 nm and equal to or shorter than 800 nm. By combining these and appropriately setting the content thereof, the function of allowing the transmission of light having a desired wavelength range can be reliably given to the base material layer 1. Accordingly, the optical layer 10 (cover member) exhibits light-transmitting properties of transmitting light having a desired wavelength range.

The first light absorber has absorption wavelength characteristics of absorbing light having a wavelength equal to or longer than 300 nm and equal to or shorter than 550 nm. Examples of the first light absorber include a quinoline-based coloring material.

Examples of the quinoline-based coloring material include an alkyl-substituted quinoline compound such as 2-methylquinoline, 3-methylquinoline, 4-methylquinoline, 6-methylquinoline, 7-methylquinoline, 8-methylquinoline, 6-isopropylquinoline, 2,4-dimethylquinoline, 2,6-dimethylquinoline, or 4,6,8-trimethylquinoline, an amino group substituted quinoline compound such as 2-aminoquinoline, 3-aminoquinoline, 5-aminoquinoline, 6-aminoquinoline, 8-aminoquinoline, or 6-amino-2-methylquinoline, an alkoxy group-substituted quinoline compound such as 6-methoxy-2-methylquinoline or 6,8-dimethoxy-4-methylquinoline, a halogen group-substituted quinoline compound such as 6-chloroquinoline, 4,7-dichloroquinoline, 3-bromoquinoline, or 7-chloro-2-methylquinoline, and the like. One kind of each of these can be used singly, or two or more kinds of these can be used in combination.

In a case where the first light absorber is mixed with the base material layer 1 as a visible light absorber, among the lights incident on the base material layer 1, the light having a wavelength equal to or longer than 300 nm and equal to or shorter than 550 nm can be reliably absorbed into the base material layer 1.

The content rate of the first light absorber in the base material layer 1 is not particularly limited, but is preferably equal to or higher than 0.001 wt% and equal to or lower than 10 wt%, more preferably equal to or higher than 0.002 wt% and equal to or lower than 1.0 wt%, and even more preferably equal to or higher than 0.005 wt% and equal to or lower than 0.3 wt%. In a case where the content rate of the first light absorber in the base material layer 1 is less than the lower limit described above, depending on the type of the first light absorber, the visible light (light having a wavelength equal to or longer than 300 nm and equal to or shorter than 550 nm) absorptiveness of the base material layer 1 may be reduced. In addition, even though the content rate of the first light absorber in the base material layer 1 is higher than the upper limit described above, the visible light (light having a wavelength equal to or longer than 300 nm and equal to or shorter than 550 nm) absorptiveness is not further improved, and the adhesiveness of the base material layer 1 with respect to the protective layer 2 may deteriorate.

The second light absorber has absorption wavelength characteristics of absorbing light having a wavelength equal to or longer than 450 nm and equal to or shorter than 800 nm. Examples of the second light absorber include an anthraquinone-based coloring material.

Examples of the anthraquinone-based coloring material include (1) 2-anilino-1,3,4-trifluoroanthraquinone, (2) 2(o-ethoxycarbonylanilino)-1,3,4-trifluoroanthraquinone, (3) 2-(p-ethoxycarbonylanilino)-1,3,4-trifluoroanthraquinone, (4) 2-(m-ethoxycarbonylanilino)-1,3,4-trifluoroanthraquinone, (5) 2-(o-cyanoanilino)-1,3,4-trifluoroanthraquinone, (6) 2-(p-cyanoanilino)-1,3,4-trifluoroanthraquinone, (7) 2-(m-cyanoanilino)-1,3,4-trifluoroanthraquinone, (8) 2-(o-nitroanilino)-1,3,4-trifluoroanthraquinone, (9) 2-(p-nitroanilino)-1,3,4-trifluoroanthraquinone, (10) 2-(m-nitroanilino)-1,3,4-trifluoroanthraquinone, (11) 2-(p-t-butylanilino)-1,3,4-trifluoroanthraquinone, (12) 2-(o-methoxyanilino)-1,3,4-trifluoroanthraquinone, (13) 2-(2,6-diisopropylanilino)-1,3,4-trifluoroanthraquinone, (14) 2-(2,6-dichloroanilino)-1,3,4-trifluoroanthraquinone, (15) 2-(2,6-difluoroanilino)-1,3,4-trifluoroanthraquinone, (16) 2-(3,4-dicyanoanilino)-1,3,4-trifluoroanthraquinone, (17) 2-(2,4,6-trichloroanilino)-1,3,4-trifluoroanthraquinone, (18) 2-(2,3,5,6-tetrachloroanilino)-1,3,4-trifluoroanthraquinone, (19) 2-(2,3,5,6-tetrafluoroanilino)-1,3,4-trifluoroanthraquinone, (20) 3-(2,3,4,5-tetrafluoroanilino)-2-butoxy-1,4-difluoroanthraqui none, (21) 3-(4-cyano-3-chloroanilino)-2-octyloxy-1,4-difluoroanthraquin one, (22) 3-(3,4-dicyanoanilino)-2-hexyloxy-1,4-difluoroanthraquinone, (23) 3-(4-cyano-3-chloroanilino)-1,2-dibutoxy-4-fluoroanthraquinon e, (24) 3-(p-cyanoanilino)-2-phenoxy-1,4-difluoroanthraquinone, (25) 3-(p-cyanoanilino)-2-(2,6-diethylphenoxy)-1,4-difluoroanthraq uinone, (26) 3-(2,6-dichloroanilino)-2-(2,6-dichlorophenoxy)-1,4-difluoroa nthraquinone, (27) 3-(2,3,5,6-tetrachloroanilino)-2-(2,6-dimethoxyphenoxy)-1,4-d ifluoroanthraquinone, (28) 2,3-dianilino-1,4-difluoroanthraquinone, (29) 2,3-bis(p-t-butylanilino)-1,4-difluoroanthraquinone, (30) 2,3-bis(p-methoxyanilino)-1,4-difluoroanthraquinone, (31) 2,3-bis(2-methoxy-6-methylanilino)-1,4-difluoroanthraquinone, (32) 2,3-bis(2,6-diisopropylanilino)-1,4-difluoroanthraquinone, (33) 2,3-bis(2,4,6-trichloroanilino)-1,4-difluoroanthraquinone, (34) 2,3-bis(2,3,5,6-tetrachloroanilino)-1,4-difluoroanthraquinone, (35) 2,3-bis(2,3,5,6-tetrafluoroanilino)-1,4-difluoroanthraquinone, (36) 2,3-bis(p-cyanoanilino)-1-methoxyethoxy-4-fluoroanthraquinone, (37) 2-(2,6-dichloroanilino)-1,3,4-trichloroanthraquinone, (38) 2-(2,3,5,6-tetrafluoroanilino)-1,3,4-trichloroanthraquinone, (39) 3-(2,6-dichloroanilino)-2-(2,6-dichlorophenoxy)-1,4-dichloroa nthraquinone, (40) 2-(2,6-dichloroanilino)anthraquinone, (41) 2-(2,3,5,6-tetrafluoroanilino)anthraquinone, (42) 3-(2,6-dichloroanilino)-2-(2,6-dichlorophenoxy)anthraquinone, (43) 2,3-bis(2-methoxy-6-methylanilino)-1,4-dichloroanthraquinone, (44) 2,3-bis(2,6-diisopropylanilino)anthraquinone, (45) 2-butylamino-1,3,4-trifluoroanthraquinone, (46) 1,4-bis(n-butylamino)-2,3-difluoroanthraquinone, (47) 1,4-bis(n-octylamino)-2,3-difluoroanthraquinone, (48) 1,4-bis(hydroxyethylamino)-2,3-difluoroanthraquinone, (49) 1,4-bis(cyclohexylamino)-2,3-difluoroanthraquinone, (50) 1,4-bis(cyclohexylamino)-2-octyloxy-3-fluoroanthraquinone, (51) 1,2,4-tris(2,4-dimethoxyphenoxy-3-fluoroanthraquinone, (52) 2,3-bis(phenylthio)-1-phenoxy-4-fluoroanthraquinone, (53) 1,2,3,4-tetra(p-methoxyphenoxy)-anthraquinone, and the like. One kind of each of these can be used singly, or two or more kinds of these can be used in combination.

In a case where the second light absorber is mixed with the base material layer 1 as a visible light absorber, among the lights incident on the base material layer 1, the light having a wavelength equal to or longer than 450 nm and equal to or shorter than 800 nm can be reliably absorbed into the base material layer 1.

The content rate of the second light absorber in the base material layer 1 is not particularly limited, but is preferably equal to or higher than 0.001 wt% and equal to or lower than 10 wt%, more preferably equal to or higher than 0.002 wt% and equal to or lower than 1.0 wt%, and even more preferably equal to or higher than 0.005 wt% and equal to or lower than 0.6 wt%. In a case where the content rate of the second light absorber in the base material layer 1 is less than the lower limit described above, depending on the type of the second light absorber, sometimes the visible light (light having a wavelength equal to or longer than 450 nm and equal to or shorter than 800 nm) absorptiveness of the base material layer 1 may be reduced. In addition, even though the content rate of the second light absorber in the base material layer 1 is higher than the upper limit described above, the visible light (light having a wavelength equal to or longer than 450 nm and equal to or shorter than 800 nm) absorptiveness is not further improved, and sometimes the adhesiveness of the base material layer 1 with respect to the protective layer 2 deteriorates.

The third light absorber has absorption wavelength characteristics of absorbing light having a wavelength equal to or longer than 400 nm and equal to or shorter than 800 nm. Examples of the third light absorber include a perinone-based coloring material.

Examples of the perinone-based coloring material include 2,3-naphthaloperinone, 1,8-naphthaloperinone, tetrabromo-1,2-naphthaloperinone, and the like. One kind of each of these can be used singly, or two or more kinds of these can be used in combination.

In a case where the perinone-based coloring material is mixed with the base material layer 1, among the lights incident on the base material layer 1, the light having a wavelength equal to or longer than 400 nm and equal to or shorter than 800 nm can be reliably absorbed into the base material layer 1.

The content rate of the third light absorber in the base material layer 1 is not particularly limited, but is preferably equal to or higher than 0.001 wt% and equal to or lower than 10 wt%, more preferably equal to or higher than 0.002 wt% and equal to or lower than 1.0 wt%, and even more preferably equal to or higher than 0.005 wt% and equal to or lower than 0.6 wt%. In a case where the content rate of the third light absorber in the base material layer 1 is less than the lower limit described above, depending on the type of the third light absorber, sometimes the visible light (light having a wavelength equal to or longer than 400 nm and equal to or shorter than 800 nm) absorptiveness of the base material layer 1 is reduced. In addition, even though the content rate of the third light absorber in the base material layer 1 is higher than the upper limit described above, the visible light (light having a wavelength equal to or longer than 400 nm and equal to or shorter than 800 nm) absorptiveness is not further improved, and sometimes the adhesiveness of the base material layer 1 with respect to the protective layer 2 deteriorates.

It is preferable that the base material layer 1 further contains an ultraviolet absorber in addition to the visible light absorber. In a case where the base material layer 1 contains an ultraviolet absorber, it is possible to precisely inhibit or prevent the resin material or the visible light absorber contained in the base material layer 1 and the substance to be covered with the optical layer 10 (cover member) from deteriorating by ultraviolet rays. As a result, the base material layer 1 has excellent weather fastness.

The ultraviolet absorber is not particularly limited. However, it is preferable that the ultraviolet absorber contains a fourth light absorber absorbing light having a wavelength equal to or longer than 100 nm and equal to or shorter than 400 nm. In a case where the ultraviolet absorber contains the fourth light absorber, among the ultraviolet rays and visible light, the transmission of light having a relatively short wavelength (light having a wavelength equal to or shorter than 400 nm) can be inhibited. As a result, it is possible to make the ultraviolet absorber reliably perform the function thereof.

The fourth light absorber (ultraviolet absorber) is not particularly limited. Examples thereof include a triazine-based compound, a benzophenone-based compound, a benzotriazole-based compound, and a cyanoacrylate-based compound. One kind of each of these can be used singly, or two or more kinds of these can be used in combination. Among these, a triazine-based compound is particularly preferable. In a case where the triazine-based compound is used, it is possible to more reliably prevent or inhibit the base material layer 1 from deteriorating by ultraviolet rays and to further improve the weather fastness of the optical layer 10.

Examples of the triazine-based compound include a 2-mono(hydroxyphenyl)-1,3,5-triazine compound, a 2,4-bis(hydroxyphenyl)-1,3,5-triazine compound, and a 2,4,6-tris(hydroxyphenyl)-1,3,5-triazine compound. Specifically, examples thereof include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4-diphenyl-6-(2-hydroxy-4-butoxyethoxy)-1,3,5-triazine, 2,4-bis(2-hydroxy-4-butoxyphenyl)-6-(2,4-dibutoxyphenyl)-1,3, 5-triazine, 2,4,6-tris(2-hydroxy-4-methoxyphenyl)-1,3,5-triazine, 2,4,6-tris(2-hydroxy-4-ethoxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-oxtyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-4-ethoxycarbonylethyloxyphenyl)-1,3,5-tr iazine, 2,4,6-tris(2-hydroxy-4-(1-(2-ethoxyhexyloxy)-1-oxopropan-2-yl oxy)phenyl)-1,3,5-triazine, 2,4,6-tris(2-hydroxy-3-methyl-4-methoxyphenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazin e, 2,4,6-tris(2-hydroxy-3-methyl-4-octyloxyphenyl)-1,3,5-triazin e, 2,4,6-tris(2-hydroxy-3-methyl-4-dodecyloxyphenyl)-1,3,5-triaz ine, 2,4,6-tris(2-hydroxy-3-methyl-4-benzyloxyphenyl)-1,3,5-triazi ne, 2,4,6-tris(2-hydroxy-3-methyl-4-ethoxyethoxyphenyl)-1,3,5-tri azine, 2,4,6-tris(2-hydroxy-3-methyl-4-butoxyethoxyphenyl)-1,3,5-tri azine, 2,4,6-tris(2-hydroxy-3-methyl-4-propoxyethoxyphenyl)-1,3,5-tr iazine, 2,4,6-tris(2-hydroxy-3-methyl-4-methoxycarbonylpropyloxypheny 1)-1,3,5-triazine, 2,4,6-tris(2-hydroxy-3-methyl-4-ethoxycarbonylethyloxyphenyl) -1,3,5-triazine, 2,4,6-tris(2-hydroxy-3-methyl-4-(1-(2-ethoxyhexyloxy)-1-oxopr opan-2-yloxy)phenyl)-1,3,5-triazine, and the like. Furthermore, examples of commercial products of the triazine-based ultraviolet absorber include "TINUVIN 1577", "TINUVIN 460", "TINUVIN 477" (manufactured by BASF Japan Ltd.), "ADEKASTAB LA-F70" (manufactured by ADEKA CORPORATION), and the like. One kind of each of these can be used singly, or two or more kinds of these can be used in combination.

In a case where the fourth light absorber is mixed with the base material layer 1, among the lights incident on the base material layer 1, the light having a wavelength equal to or longer than 100 nm and equal to or shorter than 400 nm can be reliably absorbed into the base material layer 1.

In a case where the base material layer 1 contains the fourth light absorber, the content rate of the fourth light absorber in the base material layer 1 is not particularly limited. However, the content rate of the fourth light absorber is preferably equal to or higher than 0.1 wt% and equal to or lower than 24 wt%, and more preferably equal to or higher than 0.1 wt% and equal to or lower than 10 wt%. In a case where the content rate of the fourth light absorber in the base material layer 1 is less than the lower limit described above, depending on the type of the first light absorber, the weather fastness of the base material layer 1 may deteriorate. Furthermore, even though the content rate of the fourth light absorber in the base material layer 1 is higher than the upper limit described above, the weather fastness is not further improved, and the adhesiveness of the base material layer 1 with respect to the protective layer 2 may deteriorate.

The base material layer 1 may contain a coloring material (for example, an infrared absorber or the like) different from the visible light absorber and the ultraviolet absorber exemplified above. Such a coloring material is not particularly limited, and examples thereof include a pigment, a dye, and the like. One kind of each of these may be used singly, or these can be used by being mixed together.

The pigment is not particularly limited, and examples thereof include organic pigments including a phthalocyanine-based pigment such as phthalocyanine green or phthalocyanine blue, an azo-based pigment such as first yellow, disazo yellow, condensed azo yellow, benzimidazolone yellow, dinitroaniline orange, benzimidazolone orange, toluidine red, permanent carmine, permanent red, naphthol red, condensed azo red, benzimidazolone carmine, or benzimidazolone brown, an anthraquinone-based pigment such as anthrapyrimidine yellow or anthraquinonyl red, an azomethine-based pigment such as copper azomethine yellow, a quinophthalone-based pigment such as quinophthalone yellow, an isoindoline-based pigment such as isoindoline yellow, a nitroso-based pigment such as nickel dioxime yellow, a perinone-based pigment such as perinone orange, a quinacridone-based pigment such as quinacridone magenta, quinacridone maroon, quinacridone scarlet, or quinacridone red, a perylene-based pigment such as such as perylene red or perylene maroon, a pyrrolopyrrole-based pigment such as diketopyrrolopyrrole red, and a dioxazine-based pigment such as dioxazine violet, inorganic pigments including a carbon-based pigment such as carbon black, lamp black, furnace black, ivory black, graphite, or fullerene, a chromate-based pigment such as chrome yellow or molybdate orange, a sulfide-based pigment such as cadmium yellow, cadmium lithopone yellow, cadmium orange, cadmium lithopone orange, vermilion, cadmium red, cadmium lithopone red, or sulfide, an oxide-based pigment such as ochre, titanium yellow, titanium barium nickel yellow, red iron oxide, red lead, amber, brown iron oxide, zinc iron chromium brown, chromium oxide, cobalt green, cobalt chromium green, titanium cobalt green, cobalt blue, cerulean blue, cobalt aluminum chromium blue, black iron oxide, manganese ferrite black, cobalt ferrite black, copper chromium black, or copper chromium manganese black, a hydroxide-based pigment such as viridian, a ferrocyanide-based pigment such as iron blue, a silicate-based pigment such as ultramarine blue, a phosphate-based pigment such as cobalt violet or mineral violet, and others (for example, cadmium sulfide and cadmium selenide), and the like. One kind of each of these can be used singly, or two or more kinds of these can be used in combination.

The dye is not particularly limited, and examples thereof include a metal complex coloring material, a cyanine-based coloring material, a xanthene-based coloring material, an azo-based coloring material, a hibiscus coloring material, a black berry coloring material, a raspberry coloring material, a pomegranate juice coloring material, a chlorophyll coloring material, and the like. One kind of each of these can be used singly, or two or more kinds of these can be used in combination.

By combining the visible light absorber, the ultraviolet absorber, and a coloring material of type different from these and appropriately setting the content thereof, it is possible to make the base material layer 1 perform the function of selectively allowing the transmission of light having a desired wavelength range.

By being laminated on the base material layer 1, the protective layer 2 covers the base material layer 1. In this way, the protective layer 2 functions as a hardcoat layer (coating layer) protecting the base material layer 1.

The protective layer 2 is constituted with the second layer formed using the resin composition of the present invention.

The resin composition of the present invention contains a silicon-modified (meth)acryl resin, a urethane (meth)acrylate, and a polyfunctional (meth)acrylate. As a result, the optical layer 10 including the protective layer 2 constituted with the second layer is excellent in weather fastness, durability, scratch resistance, and heat molding properties and particularly satisfies the following condition A.

Condition A: In a case where the second layer having an average thickness of 12 µm is formed on a base material containing a bisphenol-type polycarbonate-based resin as a main material, a coating film of a mixed solvent containing a petroleum-based solvent at a proportion equal to or higher than 45 wt% is formed on the second layer and left as it is under a condition of 85°C × 24 hours, the second layer is then returned to an atmosphere of 25°C, the mixed solvent is removed thereafter, and then a cross-cut method specified in JIS K 5600-5-6 is implemented on the second layer, an adherence of the second layer cut in the form of a lattice with respect to the base material is equal to or higher than 95%.

As described above, according to the resin composition of the present invention, it is possible to obtain the optical layer 10 in which the protective layer 2 formed of the second layer satisfying the condition A is formed on the base material layer 1. Accordingly, in a case where the optical layer 10 is applied, for example, to a cover member of a brake lamp or a hazard lamp included in moving bodies such as automobiles or two-wheel vehicles, even though the cover member is exposed to chemicals such as a petroleum-based solvent contained in a lubricant, an anticorrosive, and the like used for repairing the moving bodies, in the optical layer 10 (cover member), it is possible to precisely inhibit or prevent the protective layer 2 (second layer) from being peeled from the base material layer 1 (base material). Therefore, the optical layer 10 applied to the cover member can maintain excellent appearance. Consequently, it is possible to precisely inhibit or prevent the occurrence of changes in characteristics such as the visibility of the optical layer 10 or the light-transmitting properties of allowing the transmission of light in a specific wavelength range.

Hereinafter, various constituent materials contained in the resin composition of the present invention that is used for forming the protective layer 2 (second layer) will be described.

Because the resin composition contains the silicon-modified (meth)acryl resin, the surface hardness of the protective layer 2 can be improved. Therefore, excellent durability and scratch resistance can be given to the optical layer 10 including the protective layer 2.

Furthermore, because the resin composition contains the urethane (meth) acrylate, the flexibility of the protective layer 2 can be improved. Therefore, it is possible to inhibit the occurrence of cracks on the surface of the protective layer 2 in a case where the optical layer 10 bends by heat and to give excellent heat molding properties to the optical layer 10.

In addition, because the resin composition contains the polyfunctional (meth)acrylate, the chemical resistance of the protective layer 2 against chemicals such as a petroleum-based solvent can be improved. Therefore, the protective layer 2 satisfies the condition A. Consequently, excellent chemical resistance against chemicals such as a petroleum-based solvent can be given to the optical layer 10 including the protective layer 2. Furthermore, the surface hardness of the protective layer 2 can be improved. Therefore, it is possible to give excellent durability and scratch resistance to the optical layer 10 including the protective layer 2.

By combining the silicon-modified (meth)acryl resin, the urethane (meth)acrylate, and the polyfunctional (meth)acrylate, it is possible to obtain the optical layer 10 which satisfies both the excellent scratch resistance and excellent heat molding properties to a high degree and satisfies the condition A.

The silicon-modified (meth)acryl resin is a polymer (prepolymer) having a main chain, which includes repeating constitutional units derived from a (meth)acryl monomer having a (meth)acryloyl group, and a repeating body which is linked to the main chain and includes repeating constitutional units having a siloxane bond.

By having the main chain described above, the silicon-modified (meth)acryl resin gives transparency to the protective layer 2. Furthermore, by having the repeating body including repeating constitutional units having a siloxane bond, the silicon-modified (meth)acryl resin gives scratch resistance to the protective layer 2.

Specifically, examples of the main chain of the silicon-modified (meth)acryl resin include a structure constituted with repeating constitutional units derived from a monomer having a (meth)acryloyl group that is represented by at least one of the following Formula (1) and the following Formula (2) .

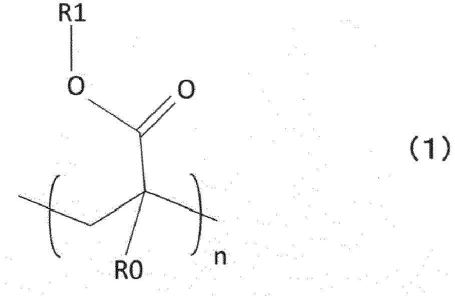

(In Formula (1), n represents an integer equal to or greater than 1, R1 independently represents a hydrocarbon group, an organic group, or a hydrogen atom, and R0 independently represents a hydrocarbon group or a hydrogen atom.)

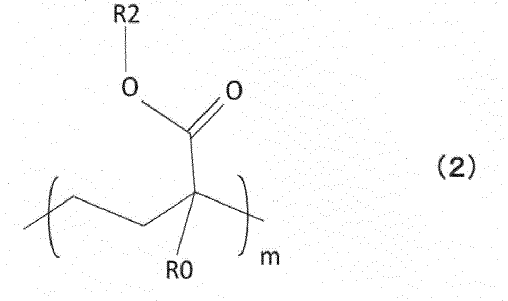

(In Formula (2), m represents an integer equal to or greater than 1, R2 independently represents a hydrocarbon group, an organic group, or a hydrogen atom, and R0 independently represents a hydrocarbon group or a hydrogen atom.)

It is preferable that the silicon-modified (meth)acryl resin has a hydroxyl group (-OH) on a terminal of the main chain or on a side chain thereof. That is, in the case of the Formula (1) or the Formula (2), R1 or R2 is preferably hydrogen. In a case where R1 or R2 is hydrogen, and a polycarbonate-based resin is used as the resin material contained in the base material layer 1, the adhesiveness between the protective layer 2 and the base material layer 1 can be improved. As a result, it is possible to precisely inhibit or prevent the protective layer 2 from being unintentionally peeled from the base material layer 1. Furthermore, in a case where an isocyanate, which will be described later, is contained in the resin composition, the hydroxyl group reacts with the isocyanate group contained in a curing agent, and consequently, a crosslinked structure is formed by a urethane bond. Therefore, the protective layer 2 can be densified. Consequently, the chemical resistance against chemicals such as a petroleum-based solvent is improved, and accordingly, the protective layer 2 reliably satisfies the condition A.

The repeating body including repeating constitutional units having a siloxane bond is bonded to at least one terminal of the main chain or to the side chain.

A siloxane bond has strong bonding force. Therefore, in a case where the silicon-modified (meth)acryl resin has the repeating body including repeating constitutional units having a siloxane bond, it is possible to obtain a protective layer 2 having further improved heat resistance and weather fastness. In addition, because the siloxane bond has strong bonding force, a hard protective layer 2 can be obtained. Accordingly, in a case where the optical layer 10 is applied to a cover member included in a brake lamp or a hazard lamp that moving bodies such as automobiles or two-wheel vehicles have, it is possible to further improve the scratch resistance of the optical layer 10 against the impact caused by sand dust, stones flying at the optical layer 10, and the like.

Specifically, examples of the repeating body including repeating constitutional units having a siloxane bond include a structure constituted with repeating constitutional units having a siloxane bond that is represented by at least one of the following Formula (3) and the following Formula (4).

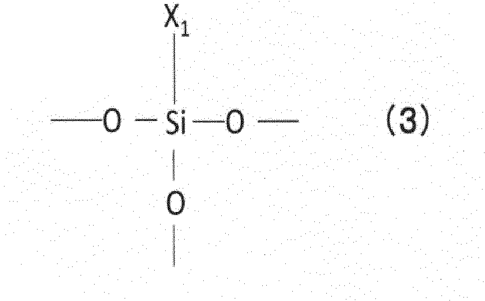

(In Formula (3), X₁ represents a hydrocarbon group or a hydroxyl group.)

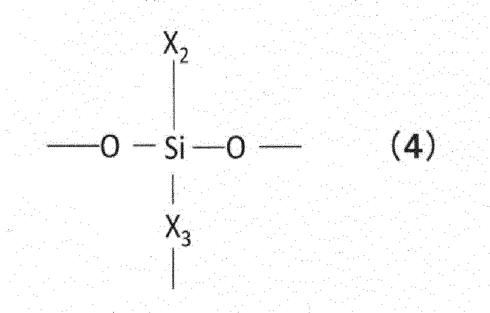

(In Formula (4), X₂ represents a hydrocarbon group or a hydroxyl group, and X₃ represents a divalent group formed in a case where hydrogen leaves a hydrocarbon group or a hydroxyl group.)

Specifically, examples of the repeating body including repeating constitutional units having a siloxane bond include a structure having polyorganosiloxane and a structure having silsesquioxane. The silsesquioxane may have any structure such as a random structure, a cage-like structure, and a ladder structure.

Examples of the hydrocarbon group include an alkyl group such as a methyl group, an ethyl group, a propyl group, or an isopropyl group, a cycloalkyl group such as a cyclopropyl group, a cyclobutyl group, a cyclopentyl group, or a cyclohexyl group, an aryl group such as a phenyl group, a naphthyl group, or a 2-methylphenyl group, an aralkyl group such as a benzyl group, a diphenylmethyl group, or a naphthylmethyl group, a phenyl group, a biphenyl group, and the like.

It is preferable that an unsaturated double bond is introduced into a terminal or a side chain of the repeating body including repeating constitutional units having a siloxane bond. In a case where the unsaturated double bond is introduced as described above, the unsaturated double bond is bonded to a (meth)acryloyl group that the urethane (meth)acrylate has, and accordingly, a network of the silicon-modified (meth) acryl resin and the urethane (meth) acrylate can be formed. As a result, the silicon-modified (meth)acryl resin and the urethane (meth) acrylate are more homogeneously dispersed in the protective layer 2, and consequently, the characteristics of the protective layer 2 described above can be more evenly exhibited in the entirety of the protective layer 2.

The content rate of the silicon-modified (meth) acryl resin in the resin composition is not particularly limited. However, in a main resin which will be described later, the content rate of the silicon-modified (meth) acryl resin is preferably equal to or higher than 7 wt% and equal to or lower than 15 wt%, more preferably equal to or higher than 8.5 wt% and equal to or lower than 15 wt%, and even more preferably equal to or higher than 10 wt% and equal to or lower than 14 wt%.

In a case where the content rate of the silicon-modified (meth)acryl resin in the resin composition is less than lower limit described above, depending on the type of the silicon-modified (meth)acryl resin, the hardness of the protective layer 2 obtained from the resin composition may be reduced. Furthermore, in a case where the content rate of the silicon-modified (meth)acryl resin in the resin composition is higher than the upper limit described above, the content of materials other than the silicon-modified (meth)acryl resin in the resin composition is relatively reduced. Accordingly, the elasticity of the protective layer 2 formed using the resin composition is likely to be reduced.

The urethane (meth)acrylate is a compound having a main chain, which has a urethane bond (-OCONH-), and a (meth) acryloyl group linked to the main chain. Furthermore, the urethane (meth)acrylate is a monomer or an oligomer.

The urethane (meth) acrylate is a compound having excellent flexibility because of a urethane bond that the compound has. Therefore, by incorporating the urethane (meth) acrylate into the protective layer 2, it is possible to give higher elasticity (flexibility) to the protective layer 2.

Accordingly, in a case where the optical layer 10 is molded in the form of a curved surface, it is possible to precisely inhibit or prevent the occurrence of cracks in a bending portion.

The number of (meth)acryloyl groups in one urethane (meth)acrylate molecule is preferably equal to or greater than 2.

In a case where one urethane (meth)acrylate molecule has two or more (meth)acryloyl groups, the urethane (meth)acrylate is bonded to the silicon-modified (meth)acryl resin, and as a result, a network can be formed. Therefore, in a case where the protective layer 2 is formed using the resin composition, it is possible to accelerate the curing of the protective layer 2. As a result, the crosslink density of the protective layer 2 can be improved, and accordingly, the hardness of the protective layer 2 can be improved to some extent. Consequently, the characteristics of the protective layer 2 such as scratch resistance or chemical resistance can be improved. Therefore, it is possible to obtain the protective layer 2 reliably satisfying the condition A.

The urethane (meth)acrylate can be obtained as a product of a reaction between an isocyanate compound, which is obtained by causing a reaction between polyol and diisocyanate, and a (meth)acrylate monomer having a hydroxyl group.

Examples of the polyol include polyether polyol, polyester polyol, and polycarbonate diol.

The polyether polyol is preferably polyethylene oxide, polypropylene oxide, or an ethylene oxide-propylene oxide random copolymer, and preferably has a number-average molecular weight less than 1,300. In a case where polyether polyol having a number-average molecular weight equal to or greater than 1,300 is used, the protective layer 2 becomes excessively flexible. Therefore, for example, scratches may be easily made on the protective layer 2 (cover member) by the impact caused by sand dust, stones flying at the protective layer 2, and the like.

The polyester polyol can be obtained, for example, by causing a polycondensation reaction between diol and dicarboxylic acid or dicarboxylic acid chloride or by causing an ester exchange reaction by means of esterifying diol or dicarboxylic acid. As the dicarboxylic acid, adipic acid, succinic acid, glutaric acid, pimelic acid, sebacic acid, azelaic acid, maleic acid, terephthalic acid, isophthalic acid, phthalic acid, and the like are used. As the diol, ethylene glycol, 1,4-butanediol, 1,6-hexanediol, diethylene glycol, dipropylene glycol, triethylene glycol, tetraethylene glycol, tripropylene glycol, tetrapropylene glycol, and the like are used.

As the polycarbonate diol, 1,4-butanediol, 1,6-hexanediol, ethylene glycol, propylene glycol, diethylene glycol, triethylene glycol, 1,2-propylene glycol, 1,3-propylene glycol, dipropylene glycol, 2-ethyl-1,3-hexanediol, 1,5-pentanediol, 3-methyl-1,5-pentanediol, 1,4-cyclohexanediol, polyoxyethylene glycol, and the like are used. One kind of each of these can be used singly, or two or more kinds of these can be used in combination.

Examples of the acrylate monomer having a hydroxyl group include trimethylolpropane triacrylate, pentaerythritol triacrylate, dipentaerythritol triacrylate, 2-hydroxyethyl acrylate, 2-hydroxypropyl acrylate, 2-hydroxybutyl acrylate, 3-hydroxybutyl acrylate, polyethylene glycol monoacrylate, and the like.

The weight-average molecular weight of the urethane (meth)acrylate is not particularly limited, but is preferably equal to or greater than 1.0 × 10³ and equal to or smaller than 1.5 × 10⁴, and more preferably equal to or greater than 1.5 × 10³ and equal to or smaller than 1.0 × 10⁴. In a case where the weight-average molecular weight of the urethane (meth)acrylate is within the above range, the balance between the elasticity and the hardness of the protective layer 2 becomes excellent. Accordingly, in a case where the optical layer 10 is molded in the form of a curved surface, the occurrence of cracks in a bending portion can be inhibited.

The weight-average molecular weight of the urethane (meth)acrylate can be measured, for example, by gel permeation chromatography (GPC).

As the urethane (meth)acrylate, among the materials described above, an alicyclic urethane (meth)acrylate having a carbonate structure is particularly preferable. In a case where the alicyclic urethane (meth)acrylate is used, the protective layer 2 can become a layer having both the higher elasticity (flexibility) and higher stress resistance. Furthermore, the weather fastness of the protective layer 2 becomes excellent. Therefore, even though the optical layer 10 is made as a layer molded in the form of a curved surface, the optical layer 10 can be a layer which is excellent in water resistance, heat resistance, and weather fastness. The alicyclic urethane (meth)acrylate having a carbonate structure can be obtained, for example, using a compound, which is obtained by causing a reaction between polycarbonate diol and alicyclic diisocyanate, as an isocyanate compound.

The content rate of the urethane (meth) acrylate in the resin composition is not particularly limited. However, in the main resin which will be described later, the content rate of the urethane (meth) acrylate is preferably equal to or higher than 10 wt% and equal to or lower than 25 wt%, and more preferably equal to or higher than 12 wt% and equal to or lower than 24 wt%. In a case where the content rate of the urethane (meth)acrylate in the resin composition is less than the lower limit described above, depending on the type of the urethane (meth)acrylate, the protective layer 2 lacks flexibility, and consequently, the water resistance and the hot water resistance thereof may be reduced. Furthermore, in a case where the content rate of the urethane (meth) acrylate in the resin composition is higher than the upper limit described above, the content of materials other than the urethane (meth)acrylate in the resin composition is relatively reduced, and accordingly, the scratch resistance of the optical layer 10 may be reduced.

The polyfunctional (meth)acrylate is a combination of a tetrafunctional (meth)acrylate and an aromatic difunctional (meth)acrylate. The polyfunctional (meth)acrylate is a (meth)acrylate having two or more (meth)acryloyl groups, which contribute to a polymerization reaction, in one molecule.

Because the polyfunctional (meth) acrylate has two or more (meth)acryloyl groups, the hardness of the formed protective layer 2 becomes relatively high. Accordingly, in a case where the resin composition contains the polyfunctional (meth) acrylate, a hard protective layer 2 having high strength can be obtained.

The polyfunctional (meth) acrylate may be any of a monomer and an oligomer, and the molecular weight and the molecular structure thereof are not particularly limited.

Examples of the polyfunctional (meth)acrylate monomer include 1,4-butanediol diacrylate, ethoxylated cyclohexane dimethanol diacrylate, tricyclodecane dimethanol diacrylate, ethoxylated bisphenol A diacrylate, dipentaerythritol hexaacrylate, pentaerythritol tetraacrylate, ditrimethylolpropane triacrylate, trimethylolpropane triacrylate, pentaerythritol triacrylate, dipentaerythritol triacrylate, ethoxylated trimethylolpropane triacrylate, ethoxylated pentaerythritol triacrylate, ethoxylated pentaerythritol tetraacrylate, and the like.

Examples of the polyfunctional (meth)acrylate oligomer include polyfunctional epoxy (meth)acrylate, polyfunctional polyester (meth)acrylate, and the like.

The polyfunctional epoxy (meth)acrylate oligomer can be obtained, for example, by an esterification reaction between an oxirane ring of a bisphenol-type epoxy resin or a novolac epoxy resin having a low molecular weight and a (meth)acrylic acid.

The polyfunctional polyester (meth)acrylate oligomer can be obtained, for example, by esterifying hydroxyl groups of a polyester oligomer, which is obtained by the condensation of a polyvalent carboxylic acid and a polyhydric alcohol and has a hydroxyl group on both terminals, by using a (meth) acrylic acid. Furthermore, the polyfunctional polyester (meth)acrylate oligomer can be obtained, for example, by esterifying hydroxyl groups on the terminals of an oligomer, which is obtained by adding alkylene oxide to a polyvalent carboxylic acid, by using a (meth)acrylic acid.

The polyfunctional (meth) acrylate monomer described above is a combination of a tetrafunctional (meth) acrylate, which has four (meth)acryloyl groups in one molecule, and an aromatic difunctional (meth)acrylate which has two (meth)acryloyl groups in one molecule and has an aromatic ring. By this combination, a three-dimensional crosslinked structure having an aromatic ring is formed in the formed protective layer 2. Accordingly, it is possible to improve the chemical resistance of the protective layer 2 against chemicals such as a petroleum-based solvent and to improve the scratch resistance of the protective layer 2. Therefore, the condition A can be satisfied for a long period of time.

In the main resin which will be described later, the content rate of the tetrafunctional (meth)acrylate is equal to or higher than 40 wt% and equal to or lower than 70 wt%, and more preferably equal to or higher than 40 wt% and equal to or lower than 65 wt%. The content rate of the aromatic difunctional (meth)acrylate is not particularly limited. However, in the main resin which will be described later, the content rate of the aromatic difunctional (meth)acrylate is preferably equal to or higher than 6 wt% and equal to or lower than 15 wt%, and more preferably equal to or higher than 7 wt% and equal to or lower than 14 wt%. In a case where the content rate of the tetrafunctional (meth)acrylate and the aromatic difunctional (meth) acrylate in the resin composition is less than the lower limit described above, depending on the type of the tetrafunctional (meth)acrylate and the aromatic difunctional (meth)acrylate, the protective layer 2 may lack chemical resistance. Furthermore, in a case where the content rate of the tetrafunctional (meth)acrylate and the aromatic difunctional (meth) acrylate in the resin composition is higher than the upper limit described above, the content of materials other than the tetrafunctional (meth)acrylate and the aromatic difunctional (meth)acrylate in the resin composition is relatively reduced, and accordingly, the flexibility of the optical layer 10 may be reduced.

In a case where the silicon-modified (meth) acryl resin has a hydroxyl group, it is preferable that the resin composition contains isocyanate. In this case, the isocyanate functions as a crosslinking agent that causes the silicon-modified (meth) acrylate molecules to be bonded (crosslinked) to each other. Accordingly, because the isocyanate functions as a crosslinking agent, the hydroxyl group contained in the silicon-modified (meth) acrylate reacts with the isocyanate group contained in the isocyanate, and as a result, a crosslinked structure constituted with a urethane bond is formed. Therefore, the scratch resistance of the protective layer 2 can be improved.

The isocyanate is not particularly limited, and examples thereof include polyisocyanate having two or more isocyanate groups and the like. Particularly, it is more preferable that the resin composition contains polyfunctional isocyanate having three or more isocyanate groups. In a case where the resin composition also contains the polyfunctional isocyanate, the scratch resistance of the protective layer 2 can be further improved.

The content rate of the isocyanate in the resin composition is not particularly limited. However, in the main resin which will be described later, the content rate of the isocyanate is preferably equal to or higher than 2 wt% and equal to or lower than 8 wt%, and more preferably equal to or higher than 3 wt% and equal to or lower than 7 wt%. In a case where the content rate of the isocyanate in the resin composition is less than the lower limit described above, depending on the type of the isocyanate, the scratch resistance of the protective layer 2 may be reduced. Furthermore, in a case where the content rate of the isocyanate in the resin composition is higher than the upper limit described above, unreacted substances of the isocyanate remain in the coating film as impurities. Accordingly, depending on the type of the isocyanate, the scratch resistance and the durability (adhesiveness) of the coating film may be reduced.

In the present specification, the silicon-modified (meth)acryl resin, the urethane (meth)acrylate, the polyfunctional (meth)acrylate, and the isocyanate described above in the resin composition are "main resin". In the main resins, the silicon-modified (meth)acryl resin, the urethane (meth)acrylate, and the polyfunctional (meth)acrylate are essential components, and the isocyanate is a preferable component that the resin composition preferably contains.

It is preferable that the resin composition contains an ultraviolet absorber. In a case where the resin composition contains an ultraviolet absorber, it is possible to more reliably prevent or inhibit the protective layer 2 from deteriorating by ultraviolet rays and to further improve the weather fastness of the optical layer 10. The ultraviolet absorber is not particularly limited, and examples thereof include a triazine-based compound, a benzophenone-based compound, a benzotriazole-based compound, and a cyanoacrylate-based compound. One kind of each of these can be used singly, or two kinds of these can be used in combination. Among these, a triazine-based ultraviolet absorber is particularly preferably used. Among triazine-based ultraviolet absorbers, a hydroxyphenyl triazine-based ultraviolet absorber is more preferable. In a case where the hydroxyphenyl triazine-based ultraviolet absorber is used, the effect described above can be more markedly exhibited.

The content rate of the ultraviolet absorber in the resin composition is not particularly limited. However, the content rate of the ultraviolet absorber with respect to 100 wt% of the main resin is preferably equal to or higher than 1.0 wt% and equal to or lower than 4.0 wt%, and more preferably equal to or higher than 1.7 wt% and equal to or lower than 3.5 wt%. In a case where the content rate of the ultraviolet absorber in the resin composition is less than the lower limit described above, sometimes the weather fastness of the protective layer 2 is reduced. Furthermore, even though the content rate of the ultraviolet absorber in the resin composition is higher than the upper limit described above, the weather fastness is not further improved, and sometimes the transparency of the protective layer 2 or the adhesiveness of the protective layer 2 with respect to the base material layer 1 deteriorates.

The resin composition may contain a photopolymerization initiator. The photopolymerization initiator is not particularly limited. As the photopolymerization initiator, it is possible to use benzoin or benzoin alkyl ethers such as benzoin, benzoin methyl ether, benzoin ethyl ether, and benzoin isopropyl ether, aromatic ketones such as benzophenone and benzoyl benzoate, α-dicarbonyls such as benzyl, benzyl ketals such as benzyl dimethyl ketal and benzyl diethyl ketal, acetophenones such as acetophenone, 1-(4-dodecylphenyl)-2-hydroxy-2-methylpropan-1-one, 1-hydroxycyclohexylphenylketone, 2-hydroxy-2-methyl-1-phenyl-1-propan-1-one, 1-(4-isopropylphenyl)-2-hydroxy-2-methyl-propan-1-one, and 2-methyl-1-[4-(methylthio)phenyl]-2-morpholinopropan-1-one, anthraquinones such as 2-methylanthraquinone, 2-ethylanthraquinone, and 2-t-butylanthraquinone, thioxanthones such as 2,4-dimethylthioxanthone, 2-isopropylthioxanthone, and 2,4-diisopropylthioxanthone, phosphine oxides such as bis(2,4,6-trimethylbenzoyl)-phenyl phosphine oxide, α-acyl oximes such as 1-phenyl-1,2-propanedione-2-(o-ethoxycarbonyl)oxime, amines such as ethyl p-dimethylaminobenzoate and isoamyl p-dimethylaminobenzoate, and the like. Among these, acetophenones such as 1-(4-dodecylphenyl)-2-hydroxy-2-methylpropan-1-one, 1-hydroxycyclohexylphenylketone, 2-hydroxy-2-methyl-1-phenyl-1-propan-1-one, 1-(4-isopropylphenyl)-2-hydroxy-2-methyl-propan-1-one, and 2-methyl-1-[4-(methylthio)phenyl]-2-morpholinopropanone-1 are particularly preferable.

The content rate of the photopolymerization initiator in the resin composition is not particularly limited. However, the content rate of the photopolymerization initiator with respect to 100 wt% of the main resin is preferably equal to or higher than 0.5 wt% and equal to or lower than 10 wt%, and more preferably equal to or higher than 2.0 wt% and equal to or lower than 6.0 wt%. In a case where the content rate of the photopolymerization initiator in the resin composition is less than the lower limit described above, sometimes it is difficult to thoroughly curing the resin composition. Furthermore, even though the content rate of the photopolymerization initiator in the resin composition is higher than the upper limit described above, the characteristics of the protective layer 2 are not further improved.

The resin composition may contain other materials in addition to the materials described above.

Examples of those other materials include a resin material other than the silicon-modified (meth) acryl resin described above, a coloring agent, a sensitizer, a stabilizer, a surfactant, an antioxidant, a reduction inhibitor, an antistatic agent, a surface conditioner, a solvent, and the like.

The solvent is a component that is incorporated into the resin composition so as to make sure that the resin composition is in the form of varnish. Examples of the solvent include aliphatic hydrocarbon such as hexane, heptane, or cyclohexane, aromatic hydrocarbon such as toluene or xylene, an alcohol such as methanol, ethanol, propanol, or butanol, ketone such as methyl ethyl ketone, 2-pentanone, isophorone, or diisobutyl ketone, an ester such as ethyl acetate, butyl acetate, isobutyl acetate, or methoxypropyl acetate, a cellosolve-based solvent such as ethyl cellosolve, a glycol-based solvent such as methoxypropanol, ethoxypropanol, or methoxybutanol, and the like. One kind of each of these can be used singly, or two or more kinds of these can be used by being mixed together. Among these, a butyl group-containing solvent such as diisobutyl ketone or isobutyl acetate is preferable. The butyl group-containing solvent has excellent affinity with a polycarbonate-based resin. Accordingly, in a case where the base material layer 1 contains a polycarbonate-based resin as a base resin, the protective layer 2 formed on the base material layer 1 by using the resin composition can be a layer that exhibits excellent adhesiveness with respect to the base material layer 1.

The thickness of the protective layer 2 is not particularly limited, but is preferably equal to or greater than 1 µm and equal to or smaller than 40 µm, and more preferably equal to or greater than 3 µm and equal to or smaller than 20 µm. In a case where the thickness of the protective layer 2 is less than the lower limit described above, sometimes the weather fastness of the optical layer 10 is reduced. In contrast, provided that the thickness of the protective layer 2 is greater than the upper limit described above, in a case where the optical layer 10 is molded in the form of a curved surface, sometimes cracks occur in a bending portion.

In the condition A, the adherence of the second layer, which is cut in the form of a lattice, with respect to the base material just needs to be equal to or higher than 95%. However, the adherence is preferably equal to or higher than 98%, and more preferably 100%. In a case where the adherence is within the above range, even though the second layer is exposed to chemicals such as a petroleum-based solvent, in the optical layer 10 (cover member), the protective layer 2 is more precisely inhibited or prevented from being peeled from the base material layer 1. Accordingly, the appearance of the optical layer 10 can be maintained in a better state.

In the condition A, the base material to be prepared just needs to contain a bisphenol-type polycarbonate-based resin as a main material or may be a base material constituted with a bisphenol-type polycarbonate-based resin. However, it is preferable that the base material contains a bisphenol-type polycarbonate-based resin as a main material, a visible light absorber, and an ultraviolet absorber (fourth light absorber). In a case where the base material contains a visible light absorber and an ultraviolet absorber, the total content of the visible light absorber and the ultraviolet absorber in the base material is preferably equal to or greater than 0.30 wt% and equal to or smaller than 0.4 wt%, and more preferably about 0.38 wt%. The visible light absorber is preferably a combination of the first light absorber to the third light absorber. Furthermore, the bisphenol in the bisphenol-type polycarbonate-based resin is preferably bisphenol A. In a case where such a material is used as a base material, it can be said that the peeling properties of the protective layer 2 with respect to the base material layer 1 can be more precisely evaluated by investigating whether the condition A is satisfied. Therefore, in a case where the condition A is satisfied in the base material, it can be said that the protective layer 2 is more precisely inhibited or prevented from being peeled from the base material layer 1 in the optical layer 10 (cover member) even though the optical layer 10 is exposed to chemicals such as a petroleum-based solvent.

In the condition A, the mixed solvent to be prepared just needs to be a solvent containing a petroleum-based solvent at a proportion equal to or higher than 45 wt%. However, the content rate of the petroleum-based solvent is preferably equal to or higher than 45 wt% and equal to or lower than 70 wt%, and more preferably equal to or higher than 50 wt% and equal to or lower than 60 wt%. The petroleum-based solvent is specified in JIS K 2201-1991, and may be any of Grade 1 (benzine), Grade 2 (rubber solvent), Grade 3 (soybean solvent), Grade 4 (mineral spirit), and Grade 5 (cleaning solvent) . Examples of components other than the petroleum-based solvent that are contained in the mixed solvent include a mineral oil (petroleum-based oil), a lubricating additive, an anticorrosive additive, a surfactant, and the like. In a case where the above components are used as the mixed solvent, it can be said that the peeling properties of the protective layer 2 with respect to the base material layer 1 can be more precisely evaluated by investigating whether the condition A is satisfied. Therefore, in a case where the mixed solvent described above is used, and the condition A is satisfied, it can be said that the protective layer 2 is more precisely inhibited or prevented from being peeled from the base material layer 1 in the optical layer 10 (cover member) even though the optical layer 10 is exposed to chemicals such as a petroleum-based solvent.

In the present invention, it is preferable that the condition A is satisfied even though an acid solution (chemical), in which the total content of nitrile acetate and a salt thereof is equal to or greater than 15 wt% and equal to or smaller than 30 wt%, is used instead of the mixed solvent containing a petroleum-based solvent at a proportion equal to or higher than 45 wt%. In a case where the condition A is satisfied as described above, even though the optical layer 10 is exposed not only to chemicals such as a petroleum-based solvent but also to chemicals such as an acid solution containing nitrile acetate, the base material layer 1 is more precisely inhibited or prevented from being peeled from the protective layer 2 in the optical layer 10 (cover member) . Accordingly, it can be said that the protective layer 2 which has further improved chemical resistance and protects the base material layer 1.

It is preferable that the acid solution contains, in addition to nitrile acetate and a salt thereof, a nonionic surfactant at a proportion equal to or higher than 5 wt% and equal to or lower than 15 wt%. In a case where the acid solution further contains such a nonionic surfactant, and the condition A is satisfied even though the acid solution is used, it can be said that the protective layer 2 has further improved chemical resistance and protects the base material layer 1.

In a case where the optical layer 10 is applied to a cover member of a brake lamp or a hazard lamp included in moving bodies such as automobiles or two-wheel vehicles, the acid solution containing nitrile acetate and a salt thereof is contained in a cleaner used for washing the moving bodies and the like. It is considered that accordingly, because the acid solution (cleaner) contacts the optical layer 10 (cover member) at the time of washing the moving bodies, the base material layer 1 may be peeled from the protective layer 2.

In the condition A, it is preferable that the second layer formed on the base material is subjected to a boiling test, in which the second layer is immersed in boiling water for 10 hours, before the coating film of the mixed solvent is formed. The second layer having undergone the boiling test also satisfies the condition A. Therefore, it can be said that the protective layer 2 has further improved chemical resistance and protects the base material layer 1.

In the condition A, it is preferable that the second layer formed on the base material is subjected to a weather fastness test, in which the second layer is under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120 min, exposure time: 72 h), before the coating film of the mixed solvent is formed. The second layer subjected to the weather fastness test also satisfies the condition A. Therefore, it can be said that the protective layer 2 has further improved chemical resistance and protects the base material layer 1.

It is preferable that the second layer formed on the base material further satisfies the following condition B in addition to the condition A.

Condition B: In a case where the second layer having an average thickness of 12 µm is provided on a base material which is constituted with a bisphenol-type polycarbonate-based resin and has an average thickness of 2 mm so as to form a laminate constituted with the base material and the second layer, a coating film of the mixed solvent is formed on the second layer and left as it is under a condition of 85°C × 24 hours, the laminate is then returned to an atmosphere of 25°C, the mixed solvent is removed thereafter, and a transmittance (%) of the laminate at a wavelength of 900 nm is measured, the transmittance is equal to or higher than 60%.

The transmittance just needs to be equal to or higher than 60%, but is preferably equal to or higher than 75% and more preferably equal to or higher than 85%. It can be said that in a case where the optical layer 10, which includes the second layer satisfying the above relationship as the protective layer 2, is applied to a cover member of a brake lamp or a hazard lamp included in moving bodies such as automobiles or two-wheel vehicles, even though the cover member is exposed to chemicals such as a petroleum-based solvent contained in a lubricant, an anticorrosive, and the like used for repairing the moving bodies, the light transmission characteristics (infrared transmission characteristics) of infrared rays in various wavelength ranges are precisely inhibited or prevented from being reduced by the protective layer 2 (second layer) in the optical layer 10 (cover member). Therefore, in a case where the optical layer 10 satisfying the condition B is applied to a cover member, the infrared transmission characteristics (light transmission characteristics) of the cover member can be maintained in an excellent state.

In the condition B, it is preferable that the base material to be prepared, the mixed solvent, the acid solution, and the boiling test and the weather fastness test performed on the base material are the same as the components and the testing methods described in the condition A. In a case where the protective layer 2 satisfies the condition B in which the components and the testing methods described above are used, it can be said that the protective layer 2 is more precisely inhibited or prevented from reducing the infrared transmission characteristics and protects the base material layer 1.

### <Second embodiment>

Next, a second embodiment of the optical layer of the present invention will be described.

FIG. 2 is a vertical cross-sectional view illustrating the second embodiment of the optical layer of the present invention.

Hereinafter, an optical layer 10A of the second embodiment will be described. The description is focused on the differences with the optical layer 10 of the first embodiment, and the same matters as those of the optical layer 10 will not be described.

The optical layer 10 A of the present embodiment is the same as the first embodiment, except for the constitution of the base material layer.

In the present embodiment, the optical layer 10A has a visible light absorbing layer 3 which absorbs visible light, an ultraviolet absorbing layer 4 which absorbs ultraviolet rays, and the protective layer 2. The optical layer 10A is a laminate in which these layers are laminated in the above order from the lower side (see FIG. 2). That is, in the present embodiment, the base material layer 1 (first layer) in the first embodiment is constituted with the laminate of the visible light absorbing layer 3 and the ultraviolet absorbing layer 4.

In the laminate described above, the visible light absorbing layer 3 contains a resin material having light-transmitting properties as a main material and a visible light absorber which is dispersed in the resin material and absorbs visible light. In this way, the visible light absorbing layer 3 inhibits or prevents the transmission of visible light in a specific wavelength range. As a result, the visible light absorbing layer 3 has a function of allowing the transmission of light having a desired wavelength range. Furthermore, the ultraviolet absorbing layer 4 contains a resin material having light-transmitting properties as a main material and an ultraviolet absorber which is dispersed in the resin material and absorbs ultraviolet rays. In this way, the ultraviolet absorbing layer 4 has a function of allowing the transmission of infrared rays and visible light while inhibiting or preventing the transmission of ultraviolet rays.

The resin material contained in the visible light absorbing layer 3 and the ultraviolet absorbing layer 4 is a material which is contained in each of the layers as a main material and for molding each of the layers in the form of a substrate. As the resin material, it is possible to use the same material as the material described as the resin material contained in the base material layer 1 in the first embodiment.

Just as the ultraviolet absorber contained in the base material layer 1 of the first embodiment, it is preferable that the visible light absorber contained in the visible light absorbing layer 3 in the present embodiment contains at least one kind of light absorber among a first light absorber absorbing light having a wavelength equal to or longer than 300 nm and equal to or shorter than 550 nm, a second light absorber absorbing light having a wavelength equal to or longer than 450 nm and equal to or shorter than 800 nm, and a third light absorber absorbing light having a wavelength equal to or longer than 400 nm and equal to or shorter than 800 nm. Furthermore, as the first to third light absorbers, it is possible to use the same materials as the materials described as the first to third light absorbers contained in the base material layer 1 in the first embodiment.

Just as the ultraviolet absorber which may be contained in the base material layer 1 of the first embodiment, it is preferable that the ultraviolet absorber contained in the ultraviolet absorbing layer 4 in the present embodiment contains a fourth light absorber absorbing light having a wavelength equal to or longer than 100 nm and equal to or shorter than 400 nm. Furthermore, as the fourth light absorber, it is possible to use the same material as the material described as the fourth light absorber which may be contained in the base material layer 1 in the first embodiment.

In the present embodiment, as described above, the base material layer (first layer) is constituted with the laminate of the visible light absorbing layer 3 and the ultraviolet absorbing layer 4. Even though the base material layer (first layer) is constituted with the laminate, in a case where the protective layer 2 (second layer) formed on the laminate (base material layer) satisfies the condition A, it is possible to precisely inhibit or prevent the protective layer 2 (second layer) from being peeled from the base material layer (first layer) in the optical layer 10A (cover member) even if the optical layer 10A used as a cover member is exposed to chemicals such as a petroleum-based solvent.

Hitherto, the resin composition, the optical layer, the cover member, and the moving body of the present invention have been described, but the present invention is not limited thereto.

The optical layer of the present invention can be applied, for example, to a cover member of a brake lamp or a hazard lamp included in moving bodies such as automobiles or two-wheel vehicles as described above. In addition, the optical layer of the present invention can be applied to a cover member of an infrared radar that the moving bodies have, a windshield board or a spoiler that the moving bodies have, a cover member included in an oil meter of gasoline stations, a lens material (cover member) that monitoring cameras have, and the like.

In a case where the optical layer of the present invention is applied to a cover member that an infrared radar has, as described above, the infrared radar may be built in moving bodies such as automobile. Furthermore, the infrared radar may be built in an automatic ticketing machine or an automatic vending machine, which are installed in the outdoor environment, as a motion sensor.

In addition, the moving body (moving body of the present invention) including the optical layer of the present invention as a cover member may be an automobile, a two-wheel vehicle (motor cycle or bicycle), a ship, a railroad vehicle, an airplane, a bus, a forklift, a working vehicle carrying out a predetermined work in a construction site and the like, a golf cart, an automatic guided vehicle, or the like.

### Examples

Hereinafter, the present invention will be more specifically described based on examples, but the present invention is not limited to the examples.

### 1. Formation of optical layer

### [Example 1]

[1] First, 99.62 wt% of a bisphenol A-type polycarbonate (manufactured by Mitsubishi Engineering-Plastics Corporation, "E2000"), 0.03 wt% of a first light absorber (quinoline; manufactured by Arimoto Chemical Co . , Ltd., "plast yellow 8050") , 0.05 wt% of a second light absorber (anthraquinone A; manufactured by Arimoto Chemical Co., Ltd., "Plast blue 8590"), 0.05 wt% of a second light absorber (anthraquinone B; manufactured by Arimoto Chemical Co., Ltd., "SDO-7"), 0.07 wt% of a third light absorber (perinone; manufactured by Arimoto Chemical Co., Ltd., "Plast red 8370"), and 0.18 wt% of a fourth light absorber (UVA; manufactured by ADEKA CORPORATION, "LA-31G") were stirred·mixed together, thereby preparing a resin composition for forming a base material layer.

A mixture (manufactured by DIC Corporation, WMZ-306) of 10.5 wt% of a silicon-modified (meth) acryl resin and an acrylate monomer as a silicon-modified (meth)acryl resin, 16.8 wt% of alicyclic difunctional urethane acrylate (manufactured by The Nippon Synthetic Chemical Industry Co., Ltd., "UV-3310B") having a carbonate structure as a urethane (meth) acrylate, 57.9 wt% of tetrafunctional acrylate (manufactured by SHIN-NAKAMURA CHEMICAL CO., LTD., "A-TMMT") and 9.8 wt% of aromatic difunctional acrylate (manufactured by SHIN-NAKAMURA CHEMICAL CO., LTD., "NK ESTER A-BPE-4") as a polyfunctional (meth) acrylate, and 4.9 wt% of isocyanate (manufactured by DIC Corporation, "BURNOCK DN-992S") were stirred·mixed together, thereby preparing a resin composition. To 100 wt% of the obtained resin composition, 1.96 wt% of an ultraviolet absorber (manufactured by BASF SE, "TINUVIN 400"), 4.40 wt% of a polymerization initiator (1-hydroxycyclohexylphenylketone; manufactured by BASF SE, "IRGACURE 184"), and 0.01 wt% of a leveling agent (manufactured by KYOEISHA CHEMICAL Co., LTD, "GLANOL 450") were added. As a solvent, a mixed solvent of isobutyl acetate and diisobutyl ketone (DIBK) was added thereto such that the proportion of nonvolatile components became 30%. Then, the above components were stirred·mixed together such that all the components were dissolved, thereby preparing a resin composition for forming a protective layer.

[2] Thereafter, the prepared resin composition for forming a base material layer was put into an extruder, melted, and subjected to extrusion molding by which the resin composition was extruded from a T die, thereby obtaining a sheet material. The sheet material was cooled and cut in the form of a plate which has an average thickness of 2.0 mm and looks like a 200 mm x 100 mm rectangle in plan view, thereby obtaining a base material layer (first layer).

By using an electrode UV lamp (H valve) (manufactured by Heraeus Noblelight Fusion UV Inc), the resin composition for forming a protective layer was pretreated by being irradiated with ultraviolet rays under the conditions of an irradiation distance: 50 mm, a conveyer speed: 1.5 m/min, irradiation intensity: 350 mW/cm², and a cumulative amount of light: 700 mJ/cm². Then, by using a bar coater, the base material layer was coated with the resin composition for forming a protective layer such that the thickness of the resin composition (thickness of a protective layer to be formed) became 12 µm after drying, thereby forming a coating film on the base material layer. Thereafter, the coating film with which the base material layer was coated was dried for 10 minutes in a hot air oven at 65°C. After the drying, by using an electrodeless UV lamp manufactured by Fusion UV Systems Inc., the coating film was irradiated with ultraviolet rays under the conditions of an irradiation distance: 50 mm, a conveyer speed: 1.5 m/min, irradiation intensity: 500 mW/cm², and a cumulative amount of light: 1,700 mJ/cm². After the irradiation, the coating film was heated for 48 hours in a hot air oven at 60°C, thereby obtaining a cured protective layer. In this way, a flat plate-like optical layer according to Example 1 was obtained in which the protective layer (second layer) was formed on the base material layer (first layer).

### [Examples 2 to 6, Example 7 (Reference Example) and Comparative Examples 1 and 2]

Optical layers of Examples 2 to 7 and Comparative Examples 1 and 2 were obtained in the same manner as in Example 1, except that the resin composition for forming a protective layer was prepared by changing the content of the constituent materials contained in the resin composition for forming a protective layer as shown in Table 1. In Example 7 (Reference Example), as a silicon-modified (meth)acryl resin, a mixture of a silicon-modified (meth)acryl resin and an acrylate monomer was used (trade name "MFG COAT SD-101", silicon-modified (meth)acryl resin: 16 parts by mass, acrylate monomer: 5.5 parts by mass, manufactured by DIC Corporation).

### 2. Evaluation

The optical layer of each of the examples and the comparative examples was evaluated by the following method.

### 2-1. Chemical resistance against mixed solvent 1

The chemical resistance against a mixed solvent 1 containing a petroleum-based solvent at a proportion equal to or higher than 45 wt% and equal to or lower than 65 wt% was evaluated as below.

As the mixed solvent 1, an anticorrosive·lubricant (manufactured by KURE Engineering Ltd., "CRC 5-56") was prepared which contained a petroleum-based solvent at a proportion equal to or higher than 45 wt% and equal to or lower than 65 wt%, a mineral oil at a proportion equal to or higher than 10 wt% and equal to or lower than 30 wt%, a lubricating additive at a proportion less than 10 wt%, and an anticorrosive additive at a proportion less than 10 wt%.

### (Appearance change)

The optical layer of each of the examples and the comparative examples was left to stand under the condition of 85°C × 24 hours in a state where the coating film of the mixed solvent 1 was formed on the protective layer (second layer). Thereafter, the mixed solvent 1 was removed, and then the appearance change was observed and evaluated according to the following evaluation standards.

### <Evaluation standards>

A: The appearance of the protective layer did not change at all.
B: The appearance of the protective layer slightly changed.
C: Although the appearance of the protective layer changed, the change was in a range allowable for optical layer to be used.
D: The appearance of the protective layer markedly changed, and the optical layer was unusable.

### (Tape peeling property test)

The optical layer of each of the examples and the comparative examples was left to stand under the condition of 85°C x 24 hours in a state where the coating film of the mixed solvent 1 was formed on the protective layer (second layer), and then the mixed solvent 1 was removed. Thereafter, a pressure-sensitive adhesive tape having a width of 18 mm (manufactured by NICHIBAN CO., LTD., "CELLOTAPE (registered trademark)) " was stuck to the protective layer, and then the tape was peeled off at 25°C along a direction at an angle of 90° at a speed of 10 mm/min. Subsequently, whether or not the protective layer was peeled was observed and evaluated according to the following evaluation standards.

### <Evaluation standards>

A: The protective layer was not peeled at all.
B: The protective layer was slightly peeled.
C: The protective layer was peeled, and the peeled protective layer was slightly transferred to the optical layer side.
D: The protective layer was apparently peeled, and the peeled protective layer was apparently transferred to the optical layer side.

### (Cross-cut test)

The optical layer of each of the examples and the comparative examples was left to stand under the condition of 85°C x 24 hours in a state where the coating film of the mixed solvent 1 was formed on the protective layer (second layer), and then the mixed solvent 1 was removed. Thereafter, the optical layer was returned to the atmosphere at 25°C, and according to a cross-cut method specified in JIS K 5600-5-6, whether or not the protective layer, which was cut into 100 pieces in the form of a lattice, adhered to the base material layer was observed.

### (Spectral transmittance test)

The optical layer of each of the examples and the comparative examples was left to stand under the condition of 85°C x 24 hours in a state where the coating film of the mixed solvent 1 was formed on the protective layer (second layer), and then the mixed solvent 1 was removed. Thereafter, the optical layer was returned to the atmosphere at 25°C, and a transmittance (%) of the optical layer at a wavelength of 900 nm was measured.

For each of the tape peeling property test, the cross-cut test, and the spectral transmittance test, the optical layer of each of the examples and the comparative examples that was in a state where the coating film of the mixed solvent 1 was not yet formed was also evaluated in the same manner.

Furthermore, before being subjected to the appearance change, the tape peeling property test, the cross-cut test, and the spectral transmittance test, the optical layers of Examples 1 to 6 and the comparative examples were also subj ected to a boiling test and then subjected to the appearance change, the tape peeling property test, the cross-cut test, and the spectral transmittance test described above and evaluated in the same manner. The boiling test was performed by immersing the samples in boiling water for 10 hours.

In addition, before being subjected to the appearance change, the tape peeling property test, the cross-cut test, and the spectral transmittance test, the optical layers of Examples 1 to 6 and the comparative examples were also subjected to a treatment for weather fastness and then subjected to the appearance change, the tape peeling property test, the cross-cut test, and the spectral transmittance test described above and evaluated in the same manner. The treatment for weather fastness was performed under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120 min, exposure time: 72 h).

The optical layer of Example 7 (Reference Example) was subjected neither to the boiling test or the treatment for weather fastness nor to the appearance change, the tape peeling property test, the cross-cut test, and the spectral transmittance test.

### 2-2. Chemical resistance against mixed solvent 2

The chemical resistance against a mixed solvent 2 containing a petroleum-based solvent at a proportion equal to or higher than 50 wt% and equal to or lower than 70 wt% was evaluated as below.

As the mixed solvent 2, an anticorrosive·lubricant (manufactured by S.T. CORPORATION, "WD-40") was prepared which contained a petroleum-based solvent (mineral spirit) at a proportion equal to or higher than 50 wt% and equal to or lower than 70 wt%, a mineral oil at a proportion less than 25 wt%, and an anticorrosive·lubricating additive at a proportion less than 10 wt%.

### (Appearance change)

The optical layer of each of the examples and the comparative examples was left to stand under the condition of 85°C x 24 hours in a state where the coating film of the mixed solvent 2 was formed on the protective layer (second layer). Thereafter, the mixed solvent 2 was removed, and then the appearance change was observed and evaluated according to the following evaluation standards.

### <Evaluation standards>

A: The appearance of the protective layer did not change at all.
B: The appearance of the protective layer slightly changed.
C: Although the appearance of the protective layer changed, the change was in a range allowable for the optical layer to be used.
D: The appearance of the protective layer markedly changed, and the optical layer was unusable.

### (Tape peeling property test)

The optical layer of each of the examples and the comparative examples was left to stand under the condition of 85°C x 24 hours in a state where the coating film of the mixed solvent 2 was formed on the protective layer (second layer), and then the mixed solvent 2 was removed. Thereafter, a pressure-sensitive adhesive tape having a width of 18 mm (manufactured by NICHIBAN CO., LTD., "CELLOTAPE (registered trademark)" was stuck to the protective layer, and then the tape was peeled off at 25°C along a direction at an angle of 90° at a speed of 10 mm/min. Subsequently, whether or not the protective layer was peeled was observed and evaluated according to the following evaluation standards.

### <Evaluation standards>

A: The protective layer was not peeled at all.
B: The protective layer was slightly peeled.
C: The protective layer was peeled, and the peeled protective layer was slightly transferred to the optical layer side.
D: The protective layer was apparently peeled, and the peeled protective layer was apparently transferred to the optical layer side.

### (Cross-cut test)

The optical layer of each of the examples and the comparative examples was left to stand under the condition of 85°C x 24 hours in a state where the coating film of the mixed solvent 2 was formed on the protective layer (second layer), and then the mixed solvent 2 was removed. Thereafter, the optical layer was returned to the atmosphere at 25°C, and according to a cross-cut method specified in JIS K 5600-5-6, whether or not the protective layer, which was cut into 100 pieces in the form of a lattice, adhered to the base material layer was observed.

### (Spectral transmittance test)

The optical layer of each of the examples and the comparative examples was left to stand under the condition of 85°C x 24 hours in a state where the coating film of the mixed solvent 2 was formed on the protective layer (second layer), and then the mixed solvent 2 was removed. Thereafter, the optical layer was returned to the atmosphere at 25°C, and a transmittance (%) of the optical layer at a wavelength of 900 nm was measured.

Before being subjected to the appearance change, the tape peeling property test, the cross-cut test, and the spectral transmittance test, the optical layers of Examples 1 to 6 and the comparative examples were also subjected to a boiling test and then subj ected to the appearance change, the tape peeling property test, the cross-cut test, and the spectral transmittance test described above and evaluated in the same manner. The boiling test was performed by immersing the samples in boiling water for 10 hours.

In addition, before being subjected to the appearance change, the tape peeling property test, the cross-cut test, and the spectral transmittance test, the optical layers of Examples 1 to 6 and the comparative examples were also subjected to a treatment for weather fastness and then subjected to the appearance change, the tape peeling property test, the cross-cut test, and the spectral transmittance test described above and evaluated in the same manner. The treatment for weather fastness was performed under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120 min, exposure time: 72 h).

The optical layer of Example 7 (Reference Example) was subjected neither to the boiling test or the treatment for weather fastness nor to the appearance change, the tape peeling property test, the cross-cut test, and the spectral transmittance test.

### 2-3. Chemical resistance against acid solution 1

The chemical resistance against an acid solution 1, in which the total content of nitrile acetate and a salt thereof was equal to or greater than 15 wt% and equal to or smaller than 30 wt%, was evaluated as below.

As the acid solution 1, a cold cleaner (manufactured by bluechem JAPAN, "CS") was prepared in which the total content of nitrile acetate and a salt thereof was equal to or greater than 15 wt% and equal to or smaller than 30 wt% and the content of a nonionic surfactant was equal to or greater than 5 wt% and equal to or smaller than 15 wt%.

### (Appearance change)

The optical layer of each of the examples and the comparative examples was left to stand under the condition of 85°C x 24 hours in a state where a coating film of the acid solution 1 was formed on the protective layer (second layer). Thereafter, the acid solution 1 was removed, and then the appearance change was observed and evaluated according to the following evaluation standards.

### <Evaluation standards>

A: The appearance of the protective layer did not change at all.
B: The appearance of the protective layer slightly changed.
C: Although the appearance of the protective layer changed, the change was in a range allowable for the optical layer to be used.
D: The appearance of the protective layer markedly changed, and the optical layer was unusable.

### (Tape peeling property test)

The optical layer of each of the examples and the comparative examples was left to stand under the condition of 85°C x 24 hours in a state where the coating film of the acid solution 1 was formed on the protective layer (second layer), and then the acid solution 1 was removed. Thereafter, a pressure-sensitive adhesive tape having a width of 18 mm (manufactured by NICHIBAN CO., LTD., "CELLOTAPE (registered trademark)" was stuck to the protective layer, and then the tape was peeled off at 25°C along a direction at an angle of 90° at a speed of 10 mm/min. Subsequently, whether or not the protective layer was peeled was observed and evaluated according to the following evaluation standards.

### <Evaluation standards>

A: The protective layer was not peeled at all.
B: The protective layer was slightly peeled.
C: The protective layer was peeled, and the peeled protective layer was slightly transferred to the optical layer side.
D: The protective layer was apparently peeled, and the peeled protective layer was apparently transferred to the optical layer side.

### (Cross-cut test)

The optical layer of each of the examples and the comparative examples was left to stand under the condition of 85°C x 24 hours in a state where the coating film of the acid solution 1 was formed on the protective layer (second layer), and then the acid solution 1 was removed. Thereafter, the optical layer was returned to the atmosphere at 25°C, and according to a cross-cut method specified in JIS K 5600-5-6, whether or not the protective layer, which was cut into 100 pieces in the form of a lattice, adhered to the base material layer was observed.

### (Spectral transmittance test)

The optical layer of each of the examples and the comparative examples was left to stand under the condition of 85°C x 24 hours in a state where the coating film of the acid solution 1 was formed on the protective layer (second layer), and then the acid solution 1 was removed. Thereafter, the optical layer was returned to the atmosphere at 25°C, and a transmittance (%) of the optical layer at a wavelength of 900 nm was measured.

Before being subjected to the appearance change, the tape peeling property test, the cross-cut test, and the spectral transmittance test, the optical layers of Examples 1 to 6 and the comparative examples were also subjected to a boiling test and then subj ected to the appearance change, the tape peeling property test, the cross-cut test, and the spectral transmittance test described above and evaluated in the same manner. The boiling test was performed by immersing the samples in boiling water for 10 hours.

Before being subjected to the appearance change, the tape peeling property test, the cross-cut test, and the spectral transmittance test, the optical layers of Examples 1 to 6 and the comparative examples were also subjected to a treatment for weather fastness and then subjected to the appearance change, the tape peeling property test, the cross-cut test, and the spectral transmittance test described above and evaluated in the same manner. The treatment for weather fastness was performed under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120min, exposure time: 72 h).

The optical layer of Example 7 (Reference Example) was subjected neither to the boiling test or the treatment for weather fastness nor to the appearance change, the tape peeling property test, the cross-cut test, and the spectral transmittance test.

### 2-4. Molding properties

The molding properties of the optical layer were evaluated as below.

### (Molding properties (heat bending properties))

For the optical layer of each of Examples 1 to 6 and the comparative examples, a sample having a size of 60 mm (width) x 120 mm (length) x 2 mm (thickness) was prepared. The sample was softened by being heated for 3 minutes in a hot air circulating oven set to be 170°C. Immediately after being taken out of the oven, the sample was stuck to wooden cylinders having various radii through flannel cloth in a state where the protective layer faced outside. Until the sample was cooled to a temperature around room temperature, the sample was kept as it was such that the sample was molded in the form of a simply curved surface. Then, the radius at which the appearance change did not occur was adopted as a minimum radius of curvature R, and the heat bending properties were evaluated according to the following evaluation standards. For the optical layer of Example 7 (Reference Example), the following heat bending property evaluation was not performed.

### <Evaluation standards>

A: The minimum radius of curvature R was equal to or smaller than 50 mmR.
B: The minimum radius of curvature R was greater than 50 mmR and equal to or smaller than 100 mmR.
C: The minimum radius of curvature R was greater than 100 mmR and equal to or smaller than 300 mmR.
D: The minimum radius of curvature R was greater than 300 mmR.

### 2-5. Weather fastness

The weather fastness of the optical layer was evaluated as below. For the optical layer of Example 7 (Reference Example), the tests relating to the weather fastness described below were not performed.

### (Tape peeling property test)

In a state where the protective layer (second layer) faced up, the optical layer of each of the examples and the comparative examples was caused to be under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120 min) for 120 hours. Thereafter, a pressure-sensitive adhesive tape having a width of 18 mm (manufactured by NICHIBAN CO., LTD., "CELLOTAPE (registered trademark) " was stuck to the protective layer, and then the tape was peeled off at 25°C along a direction at an angle of 90° at a speed of 10 mm/min. Subsequently, whether or not the protective layer was peeled was observed and evaluated according to the following evaluation standards.

### <Evaluation standards>

A: The protective layer was not peeled at all.
B: The protective layer was slightly peeled.
C: The protective layer was peeled, and the peeled protective layer was slightly transferred to the optical layer side.
D: The protective layer was apparently peeled, and the peeled protective layer was apparently transferred to the optical layer side.

### (Cross-cut test)

In a state where the protective layer (second layer) faced up, the optical layer of each of the examples and the comparative examples was caused to be under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120min) for 120 hours. Thereafter, the optical layer was returned to the atmosphere at 25°C, and according to a cross-cut method specified in JIS K 5600-5-6, whether or not the protective layer, which was cut into 100 pieces in the form of a lattice, adhered to the base material layer was observed.

### (Spectral transmittance test)

In a state where the protective layer (second layer) faced up, the optical layer of each of the examples and the comparative examples was caused to be under the condition of EYE SUPER UV TESTER (manufactured by IWASAKI ELECTRIC CO., LTD., ultraviolet illuminance: 150 mW/cm², temperature 63°C/humidity 50%RH, shower frequency: 18 min/120min) for 120 hours. Thereafter, the optical layer was returned to the atmosphere at 25°C, and a transmittance (%) of the optical layer at a wavelength of 900 nm was measured.

The following Table 1 shows the evaluation results obtained as above from the optical layer of each of the examples and the comparative examples.

**[Table 1]**

| | | | | Example 1 | Example 2 | Example 3 | Example 4 | Example 5 | Example 6 | Example 7 | Compara tive Example 1 | Comparative Example 2 |
|---|---|---|---|---|---|---|---|---|---|---|---|---|
| Protective layer | WMZ-306 | Silicon-modified (meth) acryl resin + acrylate monomer | (wt%) | 10.5 | 12.7 | 8.9 | 13.7 | 7.8 | 14.8 | | 100.0 | |
| | SD-101 | Silicon-modified (meth) acryl resin + acrylate monomer | (wt%) | | | | | | | 21.5 | | |
| | A-TMMT | Tetrafunctional acrylate | (wt%) | 57.9 | 49.0 | 64.1 | 45.2 | 68.7 | 40.7 | 14.7 | | 10.0 |
| | A-BPE-4 | Aromatic difunctional acrylate | (wt%) | 9.8 | 11.9 | 8.4 | 12.8 | 7.3 | 13.9 | 21.8 | | 90.0 |
| | W-3310B | Alicyclic difunctional acrylate | (wt%) | 16.8 | 20.4 | 14.3 | 21.9 | 12.5 | 23.7 | 26.0 | | |
| | DN-992S | Isocyanurate | (wt%) | 4.9 | 6.0 | 4.2 | 6.4 | 3.7 | 6.9 | 16.0 | | |
| | Main resin | Total content of main resin | (wt%) | 100.0 | 100.0 | 100.0 | 100.0 | 100.0 | 100.0 | 100.0 | 100.0 | 100.0 |
| | TINUVIN 400 | UV absorber | Ratio to main resin (wt%) | 1.96 | 2.40 | 1.68 | 2.56 | 1.48 | 2.76 | 6.50 | | |
| | IRGACURE 184 | Polymerization initiator | Ratio to main resin (wt%) | 4.40 | 4.40 | 4.40 | 4.40 | 4.40 | 4.40 | 4.40 | 4.40 | 0.04 |
| | GLANOL 450 | Leveling agent | Ratio to main resin (wt%) | 0.01 | 0.01 | 0.01 | 0.01 | 0.01 | 0.01 | 0.04 | 0.01 | 0.00 |
| | Mixed Solvent of isobutyl acetate/DIBK (1/3) | Solvent | Ratio to main resin (wt%) | 2.37 | 2.37 | 2.37 | 2.37 | 2.37 | 2.37 | 2.37 | 2.37 | 0.02 |
| | | Thickness of coat layer | (m) | 12 | 12 | 12 | 12 | 12 | 12 | 12 | 12 | 12 |
| | | | | | | | | | | | | |
| Base material layer | E2000 | polycarbonate sheet | | 99.62 | | | | | | | | |
| | Fourth light absorber | UVA | | 0.18 | | | | | | | | |
| | First light absorber | Quinoline | | 0.03 | | | | | | | | |
| | Third light absorber | Perinone | | 0.07 | | | | | | | | |
| | Second light absorber 1 | Anthraquinone A | | 0.05 | | | | | | | | |
| | Second light absorber 2 | Anthraquinone B | | 0.05 | | | | | | | | |
| | | Total | | 100.00 | | | | | | | | |
| | | Thickness of base material layer | (mm) | 2.0 | | | | | | | | |
| | | | | | | | | | | | | |
| | Durability | Tape peeling property test | Whether or not peeling | A | A | A | A | A | A | A | B | B |
| | | Cross-cut | Whether or not peeling | 100/100 | 100/100 | 100/100 | 100/100 | 100/100 | 100/100 | 100/100 | 0/100 | 100/100 |
| | | Spectral transmittance (900 nm) | %T | 90.40% | 90.20% | 90% | 89.80% | 90% | 89.20% | 89.80% | 89.30% | 88.70% |
| | Chemical resistance (5-56) (Testing environment: standstill at 85°C/24 h) | Appearance change | Whether or not appearance changes | A | A | A | A | A | A | B | D | B |
| | | Tape peeling property test | Whether or not peeling occurs | A | A | A | A | A | A | A | B | B |
| | | Cross-cut | Whether or not peeling occurs | 100/100 | 100/100 | 100/100 | 100/100 | 100/100 | 100/100 | 100/100 | 0/100 | 100/100 |
| | | Spectral transmittance | %T | 89.9% | 89.7% | 90.0% | 90.2% | 89.6% | 89.9% | 89.7% | 89.6% | 89% |
| | Chemical resistance test after boiling test (5-56) (Testing environment: standstill at 85°C/24 h) | Appearance change | Whether or not appearance changes | B | B | B | B | B | B | - | D | B |
| | | Tape peeling property test | Whether or not peeling occurs | B | B | B | B | B | B | - | B | B |
| | | Cross-cut 0-100/100 | Whether or not peeling occurs | 100/100 | 100/100 | 100/100 | 100/100 | 100/100 | 100/100 | - | 0/100 | 100/100 |
| | | Spectral transmittance | %T | 89.9% | 90.2% | 90.3% | 90.4% | 90.2% | 89.9% | - | 90% | 88.2% |
| | Chemical resistance test after weather fastness test (5-56) (Testing environment: standstill at 85°C/24 h) | Appearance change | Whether or not appearance changes | B | B | B | B | B | D | - | D | B |
| | | Tape peeling property test | Whether or not peeling occurs | B | B | B | B | B | B | - | B | B |
| | | Cross-cut 0-100/100 | Whether or not peeling occurs | 100/100 | 100/100 | 100/100 | 100/100 | 100/100 | 100/100 | - | 0/100 | 100/100 |
| | | Spectral transmittance | %T | 89.9% | 89.4% | 89.4% | 89.6% | 89.9% | 89.0% | - - | 89.9% | 88.0% |
| | Chemical resistance (WD-40) (Testing environment: standstill at 85°c/24 h) | Appearance change | Whether or not appearance changes | A | A | A | A | A | A | B | D | B |
| | | Tape peeling property test | Whether or not peeling occurs | A | A | A | A | A | A | A | B | B |
| | | Cross-cut | Whether or not peeling occurs | 100/100 | 100/100 | 100/100 | 100/100 | 100/100 | 100/100 | 100/100 | 0/100 | 100/100 |
| Evaluation | | Spectral transmittance | %T | 90.0% | 89.9% | 89.9% | 88.1% | 90.3% | 90.1% | 89.0% | 89.5% | 89.3% |
| | Chemical resistance test after boiling test (WD-40) (Testing environment: standstill at 85°c/24 h) | Appearance change | Whether or not appearance changes | B | B | B | B | B | D | - | D | B |
| | | Tape peeling property test | Whether or not peeling occurs | B | B | B | B | B | B | - | B | B |
| | | Cross-cut 0-100/100 | Whether or not peeling occurs | B | B | B | B | B | B | - | 0/100 | 100/100 |
| | | Spectral transmittance | %T | 90.0% | 90.1% | 90.3% | 90.0% | 89.6% | 90.0% | - | 83.5% | 87.8% |
| | Chemical resistance test after weather fastness test (WD-40) (Testing environment: standstill at 85°c/24 h) | Appearance change | Whether or not appearance changes | B | B | B | B | B | D | - | D | B |
| | | Tape peeling property test | Whether or not peeling occurs | B | B | B | B | B | B | - | B | B |
| | | Cross-cut 0-100/100 | Whether or not peeling occurs | 100/100 | 100/100 | 100/100 | 100/100 | 100/100 | 100/100 | - | 0/100 | 100/100 |
| | | Spectral transmittance | %T | 89.7% | 90.3% | 89.5% | 90.0% | 90.1% | 89.6% | - | 83.3% | 89.3% |
| | Chemical resistance (cold cleaner) (Testing environment: standstill at 85°c/24 h) | Appearance change | Whether or not appearance changes | C | C | C | C | C | C | C | D | D |
| | | Tape peeling property test | Whether or not peeling occurs | B | B | B | B | B | B | B | D | B |
| | | Cross-cut | Whether or not peeling occurs | 100/100 | 100/100 | 100/100 | 100/100 | 100/100 | 100/100 | 50/100 | 0/100 | 100/100 |
| | | Spectral transmittance | %T | 90.1% | 89.4% | 88.1% | 87.6% | 88.3% | 85.8% | 86.1% | 82.8% | 88.6% |
| | Chemical resistance test after boiling test (cold cleaner) (Testing environment: standstill at 85°c/24 h) | Appearance change | Whether or not appearance changes | C | C | C | C | C | C | - | D | D |
| | | Tape peeling property test | Whether or not peeling occurs | B | B | B | B | B | B | - | D | B |
| | | Cross-cut 0-100/100 | Whether or not peeling occurs | 100/100 | 100/100 | 100/100 | 100/100 | 100/100 | 100/100 | - | 0/100 | 100/100 |
| | | Spectral transmittance | %T | 90.1% | 89.9% | 89.7% | 88.1% | 90.1% | 89.0% | - | 84.3% | 90.0% |
| | Chemical resistance test after weather fastness test (cold cleaner) (Testing environment: standstill at 85°c/24 h) | Appearance change | Whether or not appearance changes | C | C | C | C | C | C | - | D | D |
| | | Tape peeling property test | Whether or not peeling occurs | B | B | B | B | B | B | - | D | B |
| | | Cross-cut 0-100/100 | Whether or not peeling occurs | 100/100 | 100/100 | 100/100 | 100/100 | 100/100 | 100/100 | - | 0/100 | 100/100 |
| | | Spectral transmittance | %T | 87.9% | 88.5% | 88.7% | 88.4% | 88.5% | 85.4% | - - | 81.2% | 81.4% |
| | Molding properties | Heat bending | mmR | A | A | A | A | B | A | - | A | A |
| | Weather fastness test 120 h | Tape peeling property test | Whether or not peeling occurs | B | B | B | B | B | B | - | D | B |
| | | Cross-cut | Whether or not peeling occurs | 100/100 | 100/100 | 100/100 | 100/100 | 100/100 | 100/100 | - | 0/100 | 0/100 |
| | | Spectral transmittance | %T | 89.2% | 89.1% | 89.2% | 89.0% | 88.8% | 88.9% | - | 89.9% | 88.6% |

As shown in Table 1, in the optical layer of each of the examples, the visible light transmittance can be suppressed to be the same as or lower than the visible light transmittance in the comparative examples, and the infrared transmittance can be improved to be the same as or higher than the infrared transmittance in the comparative examples. Furthermore, in the optical layer of each of the examples, the weather fastness, the heat molding properties, the Taber abrasion properties, and the durability can be improved to be the same as or higher than those in the comparative examples.

As shown in Table 1, in the optical layer in each of the examples, the adherence of the protective layer (second layer) with respect to the base material layer (first layer), which was determined by the cross-cut method performed after the optical layer was exposed to the coating film of the mixed solvents 1 and 2, was equal to or higher than 95%. This result shows that even though the optical layer is exposed to the coating film of the mixed solvents 1 and 2, the deterioration of appearance of the optical layer (cover member) is prevented.

In contrast, in the optical layer in each of the comparative examples, the adherence of the protective layer (second layer) with respect to the base material layer (first layer), which was determined by the cross-cut method performed after the optical layer was exposed to the coating film of the mixed solvents 1 and 2, was less than 95%. As a result, by the exposure to the coating film of the mixed solvents 1 and 2, the appearance of the optical layer (cover member) deteriorated.

### Industrial Applicability

The resin composition of the present invention is used for forming a second layer in an optical layer having a first layer and the second layer protecting the first layer, in which the first layer contains a resin material as a main material having light-transmitting properties and a visible light absorber which is dispersed in the resin material and absorbs visible light.

In the present invention, the resin composition contains a silicon-modified (meth)acryl resin, a urethane (meth)acrylate, and a polyfunctional (meth) acrylate. In a case where the second layer having an average thickness of 12 µm is formed on a base material containing a bisphenol-type polycarbonate-based resin as a main material, a coating film of a mixed solvent containing a petroleum-based solvent at a proportion equal to or higher than 45 wt% is formed on the second layer and left as it is under a condition of 85°C × 24 hours, the second layer is then returned to an atmosphere of 25°C, the mixed solvent is removed thereafter, and then a cross-cut method specified in JIS K 5600-5-6 is implemented on the second layer, an adherence of the second layer cut in the form of a lattice with respect to the base material is equal to or higher than 95%. Accordingly, the optical layer having the second layer can be used as a cover member which is precisely inhibited or prevented from experiencing the deterioration of appearance even though the second layer is exposed to chemicals such as a petroleum-based solvent. A moving body including the optical layer as a cover member has excellent reliability. Therefore, the present invention is industrially applicable.

## Claims

1. A resin composition used for forming a second layer in an optical layer including a first layer, which contains a resin material as a main material having light-transmitting properties and a visible light absorber dispersed in the resin material and absorbing visible light, and the second layer protecting the first layer, the resin composition comprising:
a silicon-modified (meth)acryl resin;
a urethane (meth)acrylate; and
a polyfunctional (meth)acrylate,
wherein the polyfunctional (meth)acrylate contains a tetrafunctional (meth)acrylate and an aromatic difunctional (meth)acrylate, and a content rate of the tetrafunctional (meth)acrylate in the resin composition is equal to or higher than 40 wt% and equal to or lower than 70 wt%, and
wherein the resin composition satisfies the following condition A,
condition A: in a case where the second layer having an average thickness of 12 µm is formed on a base material containing a bisphenol-type polycarbonate-based resin as a main material, a coating film of a mixed solvent containing a petroleum-based solvent at a proportion equal to or higher than 45 wt% is formed on the second layer and left as it is under a condition of 85°C × 24 hours, the second layer is then returned to an atmosphere of 25°C, the mixed solvent is removed thereafter, and then a cross-cut method specified in JIS K 5600-5-6 is implemented on the second layer, an adherence of the second layer cut in the form of a lattice with respect to the base material is equal to or higher than 95%.

2. The resin composition according to claim 1 that further satisfies the following condition B,
condition B: in a case where the second layer having an average thickness of 12 µm is provided on a base material which is constituted with a bisphenol-type polycarbonate-based resin and has an average thickness of 2 mm so as to form a laminate constituted with the base material and the second layer, a coating film of the mixed solvent is formed on the second layer and left as it is under a condition of 85°C × 24 hours, the laminate is then returned to an atmosphere of 25°C, the mixed solvent is removed thereafter, and a transmittance (%) of the laminate at a wavelength of 900 nm is measured, the transmittance is equal to or higher than 60%.

3. The resin composition according to claim 1 or 2, further comprising:
an isocyanate.

4. The resin composition according to any one of claims 1 to 3,
wherein the urethane (meth)acrylate is an alicyclic urethane (meth)acrylate having a carbonate structure.

5. The resin composition according to any one of claims 1 to 3, further comprising:
an ultraviolet absorber absorbing ultraviolet rays.

6. Use of the resin composition according to any one of claims 1 to 5 for an optical layer
as a cover member having light-transmitting properties.

7. An optical layer comprising:
a first layer; and
a second layer formed using the resin composition according to any one of claims 1 to 6.

8. The optical layer according to claim 7,
wherein the resin material contained in the first layer is a bisphenol-type polycarbonate-based resin.

9. The optical layer according to claim 7 or 8,
wherein the visible light absorber contained in the first layer contains at least one kind of light absorber among a first light absorber absorbing light having a wavelength equal to or longer than 300 nm and equal to or shorter than 550 nm, a second light absorber absorbing light having a wavelength equal to or longer than 450 nm and equal to or shorter than 800 nm, and a third light absorber absorbing light having a wavelength equal to or longer than 400 nm and equal to or shorter than 800 nm.

10. The optical layer according to any one of claims 7 to 9,
wherein the first layer further contains an ultraviolet absorber absorbing ultraviolet rays.

11. A cover member having light-transmitting properties included in a moving body, comprising:
the optical layer according to any one of claims 7 to 10.

12. A moving body comprising:
the cover member according to claim 11,
wherein the moving body is one selected from a group of an automobile, a two-wheel vehicle (motor cycle or bicycle), a ship, a railroad vehicle, an airplane, a bus, a forklift,
a working vehicle carrying out a predetermined work in a construction site,
a golf cart, and an automatic guided vehicle.

## Patentansprüche

1. Harzzusammensetzung, die zur Bildung einer zweiten Schicht in einer optischen Schicht verwendet wird, die eine erste Schicht umfasst, welche ein Harzmaterial als ein Hauptmaterial mit lichtdurchlässigen Eigenschaften und einen Absorber für sichtbares Licht enthält, der in dem Harzmaterial dispergiert ist und sichtbares Licht absorbiert, und wobei die zweite Schicht die erste Schicht schützt, wobei die Harzzusammensetzung umfasst:
ein Silizium-modifiziertes (Meth)acrylharz;
ein Urethan-(meth)acrylat; und
ein polyfunktionelles (Meth)acrylat,
wobei das polyfunktionelle (Meth)acrylat ein tetrafunktionelles (Meth)acrylat und ein aromatisches difunktionelles (Meth)acrylat enthält, und der Anteil des tetrafunktionellen (Meth)acrylats in der Harzzusammensetzung gleich oder höher als 40 Gew.-% und gleich oder niedriger als 70 Gew.-% ist, und
wobei die Harzzusammensetzung die folgende Bedingung A erfüllt,
Bedingung A: in einem Fall, in dem die zweite Schicht mit einer durchschnittlichen Dicke von 12 µm auf einem Basismaterial gebildet wird, das ein Harz auf Polycarbonatbasis vom Bisphenol-Typ als Hauptmaterial enthält, ein Beschichtungsfilm aus einem gemischten Lösungsmittel, das ein Lösungsmittel auf Erdölbasis in einem Anteil von gleich oder höher als 45 Gew.-% enthält, auf der zweiten Schicht gebildet wird und unter einer Bedingung von 85°C x 24 Stunden belassen wird, die zweite Schicht dann in eine Atmosphäre von 25°C zurückgebracht wird, das gemischte Lösungsmittel danach entfernt wird, und dann ein in JIS K 5600-5-6 spezifiziertes Kreuzschnittverfahren auf der zweiten Schicht durchgeführt wird, ist die Haftung der in Form eines Gitters geschnittenen zweiten Schicht in Bezug auf das Basismaterial gleich oder höher als 95%.

2. Harzzusammensetzung nach Anspruch 1, die außerdem die folgende Bedingung B erfüllt,
Bedingung B: in einem Fall, in dem die zweite Schicht mit einer durchschnittlichen Dicke von 12 µm auf einem Basismaterial, das aus einem Harz auf Polycarbonatbasis vom Bisphenol-Typ besteht und eine durchschnittliche Dicke von 2 mm aufweist, vorgesehen ist, um ein Laminat zu bilden, das aus dem Basismaterial und der zweiten Schicht besteht, ein Beschichtungsfilm aus dem gemischten Lösungsmittel auf der zweiten Schicht gebildet wird und unter einer Bedingung von 85°C x 24 Stunden belassen wird, das Laminat dann in eine Atmosphäre von 25°C zurückgebracht wird, das gemischte Lösungsmittel danach entfernt wird und ein Transmissionsgrad (%) des Laminats bei einer Wellenlänge von 900 nm gemessen wird, der Transmissionsgrad gleich oder höher als 60% ist.

3. Harzzusammensetzung nach Anspruch 1 oder 2, ferner umfassend:
ein Isocyanat.

4. Harzzusammensetzung nach einem der Ansprüche 1 bis 3, wobei das Urethan(meth)acrylat ein alicyclisches Urethan(meth)acrylat mit einer Carbonatstruktur ist.

5. Harzzusammensetzung nach einem der Ansprüche 1 bis 3, ferner umfassend:
einen Ultraviolettabsorber, der ultraviolette Strahlen absorbiert.

6. Verwendung der Harzzusammensetzung nach einem der Ansprüche 1 bis 5 für eine optische Schicht als Abdeckelement mit lichtdurchlässigen Eigenschaften.

7. Optische Schicht, umfassend:
eine erste Schicht; und
eine zweite Schicht, die unter Verwendung der Harzzusammensetzung nach einem der Ansprüche 1 bis 6 gebildet wird.

8. Optische Schicht nach Anspruch 7, wobei das in der ersten Schicht enthaltene Harzmaterial ein Harz auf Polycarbonatbasis vom Bisphenol-Typ ist.

9. Optische Schicht nach Anspruch 7 oder 8, wobei der in der ersten Schicht enthaltene Absorber für sichtbares Licht mindestens eine Art von Lichtabsorber enthält, ausgewählt aus einem ersten Lichtabsorber, der Licht mit einer Wellenlänge von gleich oder länger als 300 nm und gleich oder kürzer als 550 nm absorbiert, einem zweiten Lichtabsorber, der Licht mit einer Wellenlänge von gleich oder länger als 450 nm und gleich oder kürzer als 800 nm absorbiert, und einem dritten Lichtabsorber, der Licht mit einer Wellenlänge von gleich oder länger als 400 nm und gleich oder kürzer als 800 nm absorbiert.

10. Optische Schicht nach einem der Ansprüche 7 bis 9, wobei die erste Schicht ferner einen Ultraviolettabsorber enthält, der ultraviolette Strahlen absorbiert.

11. Abdeckelement mit lichtdurchlässigen Eigenschaften, das in einem beweglichen Objekt enthalten ist, umfassend:
die optische Schicht nach einem der Ansprüche 7 bis 10.

12. Bewegliches Objekt, umfassend:
das Abdeckelement nach Anspruch 11,
wobei das bewegliche Objekt eines ist, das aus einer Gruppe bestehend aus einem Automobil, einem zweirädrigen Fahrzeug (Motorrad oder Fahrrad), einem Schiff, einem Eisenbahnfahrzeug, einem Flugzeug, einem Bus, einem Gabelstapler, einem Arbeitsfahrzeug, das eine vorbestimmte Arbeit auf einer Baustelle ausführt, einem Golfwagen und einem automatisch geführten Fahrzeug ausgewählt ist.

## Revendications

1. Composition de résine utilisée pour former une seconde couche dans une couche optique incluant une première couche, qui contient un matériau en résine en tant que matériau principal ayant des propriétés de transmission de lumière et un absorbeur de lumière visible dispersé dans le matériau en résine et absorbant la lumière visible, et la seconde couche protégeant la première couche, la composition de résine comportant :
une résine (méth)acrylique de silicone modifiée ;
un (méth)acrylate d'uréthanne ; et
un (méth)acrylate polyfonctionnel,
dans laquelle le (méth)acrylate polyfonctionnel contient un (méth)acrylate tétrafonctionnel et un (méth)acrylate difonctionnel aromatique, et un taux de teneur en (méth)acrylate tétrafonctionnel dans la composition de résine est égal ou supérieur à 40 % en poids et égal ou inférieur à 70 % en poids, et
dans laquelle la composition de résine satisfait à la condition A suivante,
condition A : dans un cas où la seconde couche ayant une épaisseur moyenne de 12 µm est formée sur un matériau de base contenant une résine à base de polycarbonate de type bisphénol en tant que matériau principal, un film de revêtement constitué d'un solvant mélangé contenant un solvant à base de pétrole en une proportion égale ou supérieure à 45 % en poids est formé sur la seconde couche et laissé tel quel dans une condition de 85 °C pendant 24 heures, la seconde couche est ensuite ramenée à une atmosphère de 25 °C, le solvant mélangé est retiré par la suite, et un procédé de coupe transversale spécifié dans la norme JIS K 5600-5 est mis en œuvre sur la seconde couche, une adhérence de la seconde couche coupée sous la forme d'un réseau par rapport au matériau de base est égale ou supérieure à 95 %.

2. Composition de résine selon la revendication 1 qui satisfait en outre à la condition B suivante,
condition B : dans un cas où la seconde couche ayant une épaisseur moyenne de 12 µm est prévue sur un matériau de base qui est constitué d'une résine à base de polycarbonate de type bisphénol et a une épaisseur moyenne de 2 mm de manière à former un stratifié constitué du matériau de base et de la seconde couche, un film de revêtement constitué du solvant mélangé est formé sur la seconde couche et laissé tel quel dans une condition de 85 °C pendant 24 heures, le stratifié est ensuite ramené à une atmosphère de 25 °C, le solvant mélangé est retiré par la suite, et un facteur de transmission (%) du stratifié à une longueur d'onde de 900 nm est mesuré, le facteur de transmission est égal ou supérieur à 60 %.

3. Composition de résine selon la revendication 1 ou 2, comportant en outre :
un isocyanate.

4. Composition de résine selon l'une quelconque des revendications 1 à 3,
dans laquelle le (méth)acrylate d'uréthanne est un (méth)acrylate d'uréthanne alicyclique ayant une structure de carbonate.

5. Composition de résine selon l'une quelconque des revendications 1 à 3, comportant en outre :
un absorbeur d'ultraviolets absorbant les rayons ultraviolets.

6. Utilisation de la composition de résine selon l'une quelconque des revendications 1 à 5 pour une couche optique en tant qu'élément de recouvrement ayant des propriétés de transmission de lumière.

7. Couche optique comportant :
une première couche ; et
une seconde couche formée en utilisant la composition de résine selon l'une quelconque des revendications 1 à 6.

8. Couche optique selon la revendication 7,
dans laquelle le matériau en résine contenu dans la première couche est une résine à base de polycarbonate de type bisphénol.

9. Couche optique selon la revendication 7 ou 8,
dans laquelle l'absorbeur de lumière visible contenu dans la première couche contient au moins un type d'absorbeur de lumière parmi un premier absorbeur de lumière absorbant la lumière ayant une longueur d'onde égale ou supérieure à 300 nm et égale ou inférieure à 550 nm, un deuxième absorbeur de lumière absorbant la lumière ayant une longueur d'onde égale ou supérieure à 450 nm et égale ou inférieure à 800 nm, et un troisième absorbeur de lumière absorbant la lumière ayant une longueur d'onde égale ou supérieure à 400 nm et égale ou inférieure à 800 nm.

10. Couche optique selon l'une quelconque des revendications 7 à 9,
dans laquelle la première couche contient en outre un absorbeur d'ultraviolets absorbant les rayons ultraviolets.

11. Élément de recouvrement ayant des propriétés de transmission de lumière inclus dans un corps mobile, comportant :
la couche optique selon l'une quelconque des revendications 7 à 10.

12. Corps mobile comportant :
l'élément de recouvrement selon la revendication 11,
dans lequel le corps mobile est un élément choisi parmi un groupe constitué d'une automobile, d'un véhicule à deux roues (motocyclette ou bicyclette), d'un navire, d'un véhicule ferroviaire, d'un avion, d'un bus, d'un chariot élévateur à fourche, d'un véhicule de travail exécutant un travail prédéterminé sur un chantier de construction, d'une voiturette de golf et d'un véhicule à guidage automatique.
